# EUROPÄISCHE PATENTSCHRIFT

(11) **EP 1 931 197 B1**
(45) Veröffentlichungstag und Bekanntmachung des Hinweises auf die Patenterteilung: **08.04.2015**
(21) Anmeldenummer: 06753385.1
(22) Anmeldetag: 13.04.2006
(51) Int. Cl.: A01N 25/10, A01N 25/14, A01N 43/653, A01P 3/00, C08F 220/18, C08F 220/38, C08F 220/60

(54) **ZUBEREITUNG, ENTHALTEND WENIGSTENS EIN CONAZOLFUNGIZID, EIN WEITERES FUNGIZIG UND EIN STABILISIERENDES C0P0LYMER**
PREPARATION CONTAINING AT LEAST ONE CONAZOLE FUNGICIDE A FURTHER FUNGICIDE AND A STABILISING COPOLYMER
PREPARATION CONTENANT AU MOINS UN FONGICIDE DU GROUPE DES CONAZOLES, UN AUTRE FONGICIDE ET UN COPOLYMERE STABILISANT

(30) Priorität: 18.04.2005 DE 102005017800
(43) Veröffentlichungstag der Anmeldung: 18.06.2008
(60) Teilanmeldung: 11162363.3
(73) Patentinhaber: BASF SE, 67056 Ludwigshafen (DE)
(72) Erfinder: KOLTZENBURG, Sebastian, 67125 Dannstadt-Schauernheim (DE); DOMBO, Peter, 65207 Wiesbaden (DE); OETTER, Günter, 67227 Frankenthal (DE); KRÜGER, Christian, 55291 Saulheim (DE); SCHROF, Wolfgang, 67271 Neuleiningen (DE); BRATZ, Matthias, 67133 Maxdorf (DE)
(86) Internationale Anmeldenummer: PCT/EP2006/003429
(87) Internationale Veröffentlichungsnummer: WO 2006/111327

(56) Entgegenhaltungen:
- EP-A2- 0 750 899
- WO-A-03/055944
- WO-A-2005/046328
- US-A- 4 512 969
- US-A- 5 787 686

## Beschreibung

Die Erfindung betrifft Zubereitungen, insbesondere Zubereitungen für den Pflanzenschutz, die wenigstens ein Conazolfungizid, insbesondere Epoxiconazol, und wenigstens einen weiteren Wirkstoff enthalten.

Für die Anwendung im Pflanzen- und Materialschutz ist es wünschenswert, fungizide Wirkstoffe in Form von Zubereitungen zu formulieren, die sich mit Wasser leicht auf die zur Applikation gewünschte niedrige Konzentration verdünnen lassen. Neben lösungsmittelhaltigen Emulsionskonzentraten (sogenannte EC's), in denen der Wirkstoff zusammen mit oberflächenaktiven Substanzen in einem organischen, mit Wasser in der Regel nicht mischbaren Lösungsmittel oder Öl gelöst oder suspendiert vorliegt, sind Suspensionskonzentrate (sogenannte SC's) zu nennen, in denen der Wirkstoff in Form einer feinteiligen Suspension gemeinsam mit oberflächenaktiven Substanzen vorliegt. Daneben kennt man noch wasserdispergierbare Pulver (WP) und Suspoemulsionen (SE's), welche wenigstens eine erste feste Wirkstoffphase und wenigstens eine weitere flüssige organische Phase aufweisen, die in einer wässrigen Phase emulgiert/suspendiert vorliegen.

EC's haben den prinzipiellen Nachteil, dass sie größere Mengen an organischen Lösungsmitteln enthalten, was zum einen die Herstellungskosten erhöht und zusätzliche Risiken bei Lagerung und Handhabung birgt. Suspensionskonzentrate wiederum enthalten im Unterschied zu EC's nur geringe Mengen an flüchtigen organischen Substanzen, haben jedoch den Nachteil einer geringeren Lagerstabilität, insbesondere dann, wenn die Wirkstoffe, wie im Falle des Epoxiconazols, zur Kristallisation neigen. Suspoemulsionen wiederum haben neben einem nicht zu vernachlässigenden Gehalt an flüchtigen, brennbaren organischen Lösungsmitteln den Nachteil, dass diese komplexen mehrphasigen Systeme thermodynamisch instabil sind, so dass zum einen die Lagerstabilität oftmals nicht zufriedenstellend ist und beim Verdünnen mit Wasser in unkontrollierter Weise eine Flokkulation und Niederschlagsbildung von organischen Bestandteilen auftritt bzw. auftreten kann.

Ein weiterer Nachteil konventioneller, mit Wasser verdünnbarer Wirkstoffzubereitungen wie SC, EC und SE ist darin zu sehen, dass die nach Verdünnen der Zubereitungen mit Wasser in der wässrigen Phase suspendierten bzw. emulgierten Wirkstoffpartikel bzw. Wirkstofftröpfchen eine vergleichsweise große Teilchengröße aufweisen, die in der Regel mehrere µm beträgt. Es ist jedoch wünschenswert, dass der Wirkstoff nach Verdünnen der Formulierung mit Wasser auf die für die Applikation gewünschte Konzentration in der erhaltenen wässrigen Aufbereitung in möglichst feinverteilter Form vorliegt, um einerseits eine gleichmäßige Verteilung in der Formulierung und damit eine bessere Handhabbarkeit und Dosierbarkeit zu gewährleisten und gleichzeitig, um die Bioverfügbarkeit des Wirkstoffs in der Formulierung zu erhöhen. Erstrebenswert sind dabei Formulierungen, in denen die heterogene Phase mittlere Teilchengrößen unterhalb 500 nm aufweist.

Conazolfungizide sind organische Wirkstoffe mit einer Imidazol- oder Triazolgruppe, deren fungizide Wirkung bekanntermaßen auf der Hemmung der Ergosterolbiosynthese beruht und die daher gegen eine Reihe von pflanzenschädigenden Pilzen aus der Gruppe der Ascomyceten, Basidiomyceten und Deuteromyceten wirksam sind. Epoxiconazol (Common Name für *rel*-1-[[(2*R*,3*S*)-3-(2-chlorphenyl)-2-(4-fluorphenyl)-oxiranyl]methyl]-1 H-1,2,4-triazol) ist beispielsweise ein neuerer Wirkstoff aus der Gruppe der Azolfungizide.

Zur Verbreiterung ihres Wirkungsspektrums und zur Erhöhung ihrer fungiziden Wirkung werden Conazolfungizide häufig gemeinsam mit weiteren Wirkstoffen formuliert. Hierbei können sich Probleme ergeben, insbesondere wenn der weitere Wirkstoff nur eine geringe Wasserlöslichkeit aufweist.

Die Patentanmeldungen WO 03/055944, US4,512,969 und US5,787,686 beschreibt die Verwendung von Copolymeren auf Basis von Acrylamidomethylpropansulfonsäure (AMPS) als Kristallisationsinhibitor in wässrigen Suspensionskonzentraten für den Pflanzenschutz.

Aus der älteren Patentanmeldung WO2005/046328 sind Wirkstoffformulierungen bekannt, die wenigstens einen Wirkstoff und wenigstens ein statistisches Copolymer enthalten, das durch radikalische Polymerisation von olefinisch ungesättigten Sulfonsäuren mit Estern oder Amiden der Acrylsäure oder der Methacrylsäure erhältlich ist. Der Erfindung liegt daher die Aufgabe zugrunde, Zubereitungen von Conazolfungiziden und insbesondere des Epoxiconazols bereitzustellen, die in Wasser dispergierbar sind oder sich mit Wasser leicht verdünnen lassen, ohne dass es zu unerwünschten Abscheidungen kommt. Die Zubereitungen sollten möglichst geringe Mengen an organischen Lösungsmitteln enthalten und zudem beim Verdünnen eine feine Verteilung des Wirkstoffs in der wässrigen Phase gewährleisten. Außerdem ist eine hohe Lagerstabilität gewünscht.

Diese Aufgabe wird durch eine Zubereitung gelöst, die eine Mischung wenigstens zweier voneinander verschiedener Pflanzenschutzwirkstoffe, wobei
a) wenigstens ein fungizider Wirkstoff aus der Gruppe Epoxiconazol und Metconazol (Wirkstoff 1) ausgewählt ist und
b) der wenigstens eine weitere Pflanzenschutzwirkstoff (Wirkstoff 2) in Wasser bei 20°C eine Löslichkeit unterhalb 20 g/l aufweist, wobei der Wirkstoff 2 ausgewählt ist unter von Wirkstoff 1 verschiedenen Conazolfungiziden, Strobilurinen, Morpholin-Fungiziden, Spiroxamin, Chlorothalonil, Metrafenone und Boscalid,
enthaltend weiterhin
c) wenigstens ein aus ethylenisch ungesättigten Monomeren M aufgebautes Copolymer CP, wobei die Monomere M
   α) wenigstens ein monoethylenisch ungesättigtes Monomer M1, das wenigstens eine Sulfonsäuregruppe aufweist, und
   β) wenigstens ein neutrales, monoethylenisch ungesättigtes Monomer M2 umfassen,
worin das Mengenverhältnis von Wirkstoff 1 zu dem wenigstens einen weiteren Pflanzenschutzwirkstoff 2 im Bereich von 1:10 bis 10:1 liegt,
wobei die Zubereitung das Copolymer CP in einer Menge von 10 bis 1000 Gew.-%, bezogen auf die Gesamtmenge an Wirkstoff 1 und Wirkstoff 2 enthält.

Die erfindungsgemäßen Zubereitungen sind in vorteilhafter Weise geeignet, Mischungen aus wenigstens einem Conazolfungizid, insbesondere Epoxiconazol, und dem Wirkstoff 2 in wässriger Phase zu stabilisieren, ohne dass es hierzu organischer Lösungsmittel bedarf. Im Unterschied zu den im Stand der Technik beschriebenen Suspoemulsionen erhält man beim Verdünnen der erfindungsgemäßen Zubereitungen mit Wasser wässrige Formulierungen, in denen Epoxiconazol und der wenigstens eine weitere Wirkstoff 2 in äußerst feinteiliger bis hin zu molekulardisperser Form in der kontinuierlichen wässrigen Phase vorliegen. Man nimmt an, dass die Wirkstoffe in der wässrigen Phase mit den Copolymeren CP Aggregate bilden. Diese Aggregate weisen in der Regel mittlere Teilchengrößen unterhalb 500 nm, insbesondere unterhalb 400 nm, speziell unterhalb 300 nm und ganz speziell unterhalb 200 nm auf. Inhomogenitäten und Instabilitäten in Folge von Koagulation, Kristallisation, Flokkulation oder Sedimentation treten beim Verdünnen der erfindungsgemäßen Zubereitung nicht oder nur in sehr geringem Maße auf. Zudem ist, vermutlich auf Grund der äußerst feinen Verteilung der Wirkstoffe in der wässrigen Applikationsform, entsprechend dem sehr niedrigen apparenten Teilchendurchmesser der Wirkstoffaggregate, die Aktivität der Wirkstoffe im Vergleich zu konventionellen Formulierungen von Azolfungiziden und insbesondere des Epoxiconazols erhöht.

Die hier angegebenen Teilchengrößen sind gewichtsmittlere Teilchengrößen, wie sie durch dynamische Lichtstreuung ermittelt werden können. Verfahren hierzu sind dem Fachmann geläufig, beispielsweise aus H. Wiese in D. Distier, Wässrige Polymerdispersionen, Wiley-VCH 1999, Kapitel 4.2.1, S. 40ff und dort zitierte Literatur sowie H. Auweter, D. Horn, J. Colloid Interf. Sci. 105 (1985) 399, D. Lilge, D. Horn, Colloid Polym. Sci. 269 (1991) 704 oder H. Wiese, D. Horn, J. Chem. Phys. 94 (1991) 6429.

Zu den Conazolfungiziden zählen bekanntermaßen bestimmte Imidazolverbindungen wie Climbazol, Clotrimazol, Imazalil, Oxpoconazol, Prochloraz, und Triflumizol, sowie bestimmte Triazolverbindungen wie Azaconazol, Bromuconazol, Cyproconazol, Dichlobutrazol, Difenoconazole, Diniconazol, Epoxiconazol, Etaconazol, Fenbuconazol, Fluquinconazol, Flusilazol, Flutriafol, Furconazol, Hexaconazol, Imibenconazol, Ipconazol, Metconazol, Myclobutanil, Penconazol, Propiconazol, Prothioconazol, Quinconazol, Simeconazol, Tebuconazol, Tetraconazol, Triticonazol, Triadimefon, Triadimenol und Uniconazol. In einer Ausführungsform handelt es sich bei dem Wirkstoff 1 um Epoxiconazol. In einer anderen Ausführungsform handelt es sich bei dem Wirkstoff 1 um Metconazol.

Weiterhin enthalten die erfindungsgemäßen Wirkstoffzubereitungen wenigstens einen, z.B. 1 oder 2 weitere Wirkstoffe 2, die bei 20°C in Wasser eine Löslichkeit unterhalb 20 g/l, insbesondere unterhalb 10 g/l und speziell unterhalb 5 g/l aufweisen, wobei der Wirkstoff 2 ausgewählt ist unter von Wirkstoff 1 verschiedenen Conazolfungiziden, Strobilurinen, Morpholin-Fungiziden, Spiroxamin, Chlorothalonil, Metrafenone und Boscalid.

Wesentlich ist, dass Wirkstoff1 und Wirkstoff 2 voneinander verschieden sind. Geeignete Wirkstoffe 2 sind dem Fachmann bekannt, siehe z.B. http://www.hclrss.demon.co.uk/index.html. In einer bevorzugten Ausführungsform der Erfindung weist der Wirkstoff 2 einen Schmelzpunkt unterhalb 70°C (bei Normaldruck) auf.

Beispiele für erfindungsgemäße fungizide Wirkstoffe 2 sind z.B.
- Strobilurinfungizide wie Azoxystrobin Dimoxystrobin Fluoxastrobin, Kresoxim-Methyl, Metominostrobin, Orysastrobin, Picoxystrobin, Pyraclostrobin und Trifloxystrobin, insbesondere Pyraclostrobin,
- Morpholinfungizide wie Aldamorph, Benzamorf, Carbamorph, Dodemorph, Dimethomorph, Fenpropimorph, Fenpropidin, Flumorph und Tridemorph,
- Chlorothalonil,
- Boscalid,
- nicht klassifizierte Fungizide, die unter Spiroxamin und Metrafenone ausgewählt sind,
- sowie die oben genannten Conazol-Fungizide, die von dem in der Zusammensetzung enthaltenen Wirkstoff 1 verschieden sind, insbesondere Prochloraz, Cyproconazol, Fluquinconazol, Hexaconazol, Metconazol, Penconazol, Propiconazol, Prothioconazol, Tebuconazol und Triticonazol und speziell Metconazol, Fluquinconazol und Prothioconazol.

In einer besonders bevorzugten Aufführungsform handelt es sich bei dem Wirkstoff 2 um Pyraclostrobin. In einer weiteren besonders bevorzugten Ausführungsform handelt es sich bei dem Wirkstoff 2 um eines der vorgenannten Conazolfungizide, insbesondere um Prochloraz, Cyproconazol, Fluquinconazol, Hexaconazol, Metconazol, Penconazol, Propiconazol, Prothioconazol, Tebuconazol und Triticonazol und speziell um Metconazol, Fluquinconazol und Prothioconazol.

Speziell handelt es sich bei den Wirkstoffen 1 und 2 um eine Kombination von Epoxiconazol als Wirkstoff 1 mit wenigstens einem Strobilurin, insbesondere Pyraclostrobin, und gegebenenfalls einem weiteren Wirkstoff, z.B. Fenpropidin als Wirkstoff(e) 2 oder um eine Kombination von Epoxiconazol als Wirkstoff 1 mit wenigstens einem weiteren, von Epoxiconazol verschiedenen Conazolfungizid als Wirkstoff 2, insbesondere mit einem Conazolfungizid, das unter Prochloraz, Cyproconazol, Fluquinconazol, Hexaconazol, Metconazol, Penconazol, Propiconazol, Prothioconazol, Tebuconazol und Triticonazol und speziell Metconazol, Fluquinconazol und Prothioconazol ausgewählt ist.

Eine weitere bevorzugte Ausführungsform betrifft Zubereitungen, die als Wirkstoff 1 Metconazol und als Wirkstoff 2 ein Strobilurin, insbesondere Pyraclostrobin, enthalten.

In den erfindungsgemäßen Zubereitungen liegt das Mengenverhältnis von Conazolfungizid zu dem wenigstens einen weiteren Wirkstoff 2 vorzugsweise im Bereich von 1:8 bis 8:1, insbesondere im Bereich von 5:1 bis 1:5 und speziell im Bereich von 1:3 bis 3:1.

Erfindungsgemäß enthalten die Zubereitungen wenigstens ein Copolymer CP, welches eine Stabilisierung des Wirkstoffs in der wässrigen Phase bewirkt. In der Regel enthalten die erfindungsgemäßen Zubereitungen das Copolymer CP in einer Menge von 0,1 bis 10 Gewichtsteilen, insbesondere 0,5 bis 8 Gewichtsteilen, speziell 1 bis 5 Gewichtsteilen, bezogen auf 1 Gewichtsteil der Gesamtwirkstoffmenge, d.h. der Gesamtmenge an Wirkstoff 1 und Wirkstoff 2 (entsprechend 10 bis 1000 Gew.-%, bezogen auf die Gesamtmenge an Wirkstoff 1 und Wirkstoff 2).

Bei den Copolymeren CP handelt es sich in der Regel um sogenannte statistische Copolymere, d.h. die Monomere M1 und M2 sind statistisch entlang der Polymerkette verteilt. Grundsätzlich geeignet sind auch alternierende Copolymere CP sowie Blockcopolymere CP.

Die das Copolymer CP konstituierenden Monomere M umfassen erfindungsgemäß wenigstens ein monoethylenisch ungesättigtes Monomer M1, das wenigstens eine Sulfonsäuregruppe aufweist. Der Anteil der Monomere M1 an den Monomeren M macht dabei in der Regel 1 bis 90 Gew.-%, häufig 1 bis 80 Gew.-%, insbesondere 2 bis 70 Gew.-% und speziell 5 bis 60 Gew.-%, bezogen auf die Gesamtmenge Monomere M aus.

Als Monomere M1 kommen dabei grundsätzlich alle monoethylenisch ungesättigten Monomere in Betracht, die wenigstens eine Sulfonsäuregruppe aufweisen. Die Monomere M1 können sowohl in ihrer Säureform als auch in der Salzform vorliegen. Die angegebenen Gewichtsteile beziehen sich dabei auf die Säureform.

Beispiel für Monomere M1 sind Styrolsulfonsäure, Vinylsulfonsäure, Allylsulfonsäure, Methallylsulfonsäure sowie die durch die folgende allgemeine Formel I definierten Monomere und die Salze der vorgenannten Monomere 1.

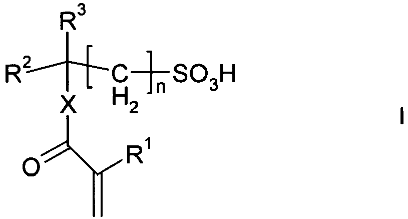

In Formel I bedeuten:
- n: 0, 1, 2 oder 3, insbesondere 1 oder 2;
- X: O oder NR⁵;
- R¹: Wasserstoff oder Methyl;
- R², R³: unabhängig voneinander Wasserstoff oder C₁-C₄-Alkyl, insbesondere Wasserstoff oder Methyl und
- R⁵: Wasserstoff oder C₁-C₄-Alkyl, insbesondere Wasserstoff.

Beispiele für Monomere M1 der allgemeinen Formel I sind 2-Acrylamido-2-methylpropansulfonsäure, 2-Methacrylamido-2-methylpropansulfonsäure, 2-Acrylamidoethansulfonsäure, 2-Methacrylamidoethansulfonsäure, 2-Acryloxyethansulfonsäure, 2-Methacryloxyethansulfonsäure, 3-Acryloxypropansulfonsäure und 2-Methacryloxypropansulfonsäure.

Sofern die Monomere M1 in ihrer Salzform vorliegen, weisen sie ein ensprechendes Kation als Gegenion auf. Beispiele für geeignete Kationen sind Alkalimetallkationen wie Na⁺ oder K⁺, Erdalkalimetallionen wie das Ca²⁺ und Mg²⁺, weiterhin Ammoniumionen wie NH₄⁺, Tetraalkylammoniumkationen wie Tetramethylammonium, Tetraethylammonium und Tetrabutylammonium, weiterhin protonierte primäre, sekundäre und tertiäre Amine, insbesondere solche, die 1, 2 oder 3 Reste, ausgewählt unter C₁-C₂₀-Alkylgruppen und Hydroxyethylgruppen tragen, z.B. die protonierten Formen von Mono-, Di- und Tributylamin, Propylamin, Diisopropylamin, Hexylamin, Dodecylamin, Oleylamin, Stearylamin, ethoxiliertes Oleylamin, ethoxiliertes Stearylamin, Ethanolamin, Diethanolamin, Triethanolamin oder von N,N-Dimethylethanolamin.

Neben den Monomeren M1 umfassen die das Copolymer CP konstituierenden Monomere M wenigstens ein neutrales monoethylenisch ungesättigtes Monomer M2. Neutral bedeutet, dass die Monomere M2 keine funktionelle Gruppe aufweisen, die im wässrigen sauer oder basisch reagiert oder in ionischer Form vorliegt. Die Gesamtmenge der Monomere M2 macht in der Regel 10 bis 99 Gew.-%, häufig 20 bis 99 Gew.-%, insbesondere 30 bis 98 Gew.-% und speziell 40 bis 95 Gew.-%, bezogen auf das Gesamtgewicht der Monomere M aus.

Beispiele für Monomere M2 sind solche mit begrenzter Wasserlöslichkeit, z.B. einer Wasserlöslichkeit unterhalb 50 g/l und insbesondere unterhalb 30 g/l (bei 20°C und 1013 mbar) und solche mit einer erhöhten Wasserlöslichkeit, z.B. einer Wasserlöslichkeit ≥ 50 g/l, insbesondere ≥ 80g/l (bei 20°C und 1013 mbar). Monomere mit begrenzter Wasserlöslichkeit werden im Folgenden auch als Monomere M2a bezeichnet. Monomere mit erhöhter Wasserlöslichkeit werden im Folgenden auch als Monomere M2b bezeichnet.

Beispiele für Monomere M2a sind vinylaromatische Monomere wie Styrol und Styrolderivate wie α-Methylstyrol, Vinyltoluol, ortho-, meta- und para-Methylstyrol, Ethylvinylbenzol, Vinylnaphthalin, Vinylxylol sowie die entsprechenden halogenierten vinylaromatischen Monomere, α-Olefine mit 2 bis 12 C-Atomen wie Ethen, Propen, 1-Buten, 1-Penten, 1-Hexen, Isobuten, Diisobuten und dergleichen, Diene wie Butadien und I-sopren, Vinylester aliphatischer C₁-C₁₈-Carbonsäuren wie Vinylacetat, Vinylpropionat, Vinyllaurat und Vinylstearat, Vinylhalogenide wie Vinylchlorid, Vinylfluorid, Vinylidenchlorid, Vinylidenfluorid, Mono- und Di-C₁-C₂₄-Alkylester von monoethylenisch ungesättigten Mono- und Dicarbonsäuren z.B. der Acrylsäure, der Methacrylsäure, der Fumarsäure, der Maleinsäure oder der Itaconsäure, Mono- und Di-C₅-C₁₂-Cycloalkylester der vorgenannten monoethylenisch ungesättigten Mono- und Dicarbonsäuren, Mono- und Diester der vorgenannten monoethylenisch ungesättigten Mono- und Dicarbonsäuren mit Phenyl-C₁-C₄-alkanolen oder Phenoxy-C₁-C₄-alkanolen, weiterhin monoethylenisch ungesättigte Ether, insbesondere C₁-C₂₀-Alkylvinylether wie Ethylvinylether, Methylvinylether, n-Butyl-vinylether, Octadecylvinylether, Triethylenglykolvinylmethylether, Vinylisobutylether, Vinyl-(2-ethylhexyl)ether, Vinylpropylether, Vinylisopropylether, Vinyldodecylether, Vinyl-tert-butylether.

Bevorzugt sind die Monomere M2a ausgewählt unter vinylaromatischen Monomeren, Estern der Acrylsäure mit C₂-C₂₀-Alkanolen, insbesondere C₂-C₁₀-Alkanolen, wie Ethylacrylat, n-Butylacrylat, 2-Butylacrylat, Isobutylacrylat, tert.-Butylacrylat, 2-Ethylhexylacrylat, Decylacrylat, Laurylacrylat und Stearylacrylat, Estern der Acrylsäure mit C₄-C₁₀-Cycloalkanolen wie Cyclohexylacrylat, Estern der Acrylsäure mit Phenyl-C₁-C₄-alkanolen wie Benzylacrylat, 2-Phenylethylacrylat und 1-Phenylethylacrylat, Estern der Acrylsäure mit Phenoxy-C₁-C₄-alkanolen wie 2-Phenoxyethylacrylat, den Estern der Methacrylsäure mit C₁-C₂₀-Alkanolen, vorzugsweise C₁-C₁₀-Alkanolen, insbesondere mit C₁-C₆-Alkanolen, wie Methylmethacrylat, Ethylmethacrylat, n-Butylmethacrylat, 2-Butylmethacrylat, Isobutylmethacrylat, tert.-Butylmethacrylat, 2-Ethylhexylmethacrylat, Decylmethacrylat, Laurylmethacrylat und Stearylmethacrylat, Estern der Methacrylsäure mit C₄-C₁₀-Cycloalkanolen wie Cyclohexylmethacrylat, Estern der Methacrylsäure mit Phenyl-C₁-C₄-alkanolen wie Benzylmethacrylat, 2-Phenylethylmethacrylat und 1-Phenylethylmethacrylat, und Estern der Methacrylsäure mit Phenoxy-C₁-C₄-alkanolen wie 2-Phenoxyethylmethacrylat. In einer besonders bevorzugten Ausführungsform umfassen die Monomere M2a zu wenigstens 80 %, bezogen auf die Gesamtmenge der Monomere M2a, und insbesondere ausschließlich Ester der Acrylsäure und/oder der Methacrylsäure mit C₁-C₆-Alkanolen.

Neutrale monoethylenisch ungesättigte Monomere mit erhöhter Wasserlöslichkeit oder gar Wassermischbarkeit sind dem Fachmann bekannt, z.B. aus Ullmann's Encyclopedia of Industrial Chemistry, "Polyacrylates", 5th ed. on CD-ROM, Wiley-VCH, Weinheim 1997. Typische Monomere M2b sind Hydroxy-C₂-C₄-alkylester monoethylenisch ungesättigter Monocarbonsäuren, insbesondere der Acrylsäure und der Methacrylsäure wie 2-Hydroxyethylacrylat, 2-Hydroxypropylacrylat, 3-Hydroxypropylacrylat, 2-Hydroxybutylacrylat, 4-Hydroxybutylacrylat, 2-Hydroxyethylmethacrylat, 2-Hydroxypropyimethacrylat, 3-Hydroxypropylmethacrylat, 2-Hydroxybutylmethacrylat, 4-Hydroxybutylmethacrylat, weiterhin Amide monoethylenisch ungesättigter Monocarbonsäuren wie Acrylamid, Methacrylamid, weiterhin Acrylnitril und Methacrylnitril, N-Vinyllactame wie N-Vinylpyrrolidon, N-Vinylcaprolactam, N-Vinylamide aliphatischer C₁-C₄-Monocarbonsäuren wie N-Vinylformamid, N-Vinylacetamid, monoethylenisch ungesättigte, Harnstoffgruppen tragende Monomere wie N-Vinyl- und N-Allylharnstoff sowie Derivate des Imidazolidin-2-ons, z.B. N-Vinyl- und N-Allylimidazolidin-2-on, N-Vinyloxyethylimidazolidin-2-on, N-Allyloxyethylimidazolidin-2-on, N-(2-Acrylamido-ethyl)imidazolidin-2-on, N-(2-Acryloxyethyl)imidazolidin-2-on, N-(2-Methacrylamido-ethyl)imidazolidin-2-on, N-(2-Methacryloxyethyl)imidazolidin-2-on (= Ureidomethacrylat), N-[2-(Acryloxyacetamido)ethyl]imidazolidin-2-on, N-[2-(2-Acryloxyacetamido)-ethyl]imidazolidin-2-on, N-[2-(2-Methacryloxyacetamido)ethyl]imidazolidin-2-on; und dergleichen. Vorzugsweise sind die Monomere M2b ausgewählt unter Hydroxy-C₁-C₄-alkylestern der Acrylsäure und der Methacrylsäure, Acrylamid, Methacrylamid, Acrylnitril, N-Vinyllactamen, wobei die Hydroxy-C₂-C₄-alkylester der Acrylsäure und der Methacrylsäure besonders bevorzugt sind. Insbesondere umfassen die Monomere M2b zu wenigstens 80 Gew.-%, bezogen auf die Gesamtmenge der Monomere M2b, wenigstens einen Hydroxy-C₂-C₄-alkylester der Acrylsäure und/oder der Methacrylsäure.

Vorzugsweise umfassen die Monomere M2 wenigstens eines der vorgenannten Monomer M2a, das bei 20°C in Wasser eine Löslichkeit unterhalb 50 g/l und insbesondere unterhalb 30 g/l aufweist. Der Anteil der Monomere M2a an den das Copolymer CP konstituierenden Monomeren M liegt typischerweise im Bereich von 10 bis 99 Gew.-%, häufig im Bereich von 20 bis 99 Gew.-%, insbesondere im Bereich von 30 bis 98 Gew.-% und speziell im Bereich von 40 bis 95 Gew.-%, bezogen auf das Gesamtgewicht der Monomere M.

In einer weiteren bevorzugten Ausführungsform sind die Monomere M2 unter Methylacrylat und Mischungen von Methylacrylat mit den vorgenannten Monomeren M2a und/oder M2b ausgewählt. Hierbei macht Methylacrylat beziehungsweise die Mischung aus Methylmethacrylat mit den Monomeren M2b typischerweise 10 bis 99 Gew.-%, insbesondere 20 bis 98 Gew.-%, und speziell 40 bis 95 Gew.-% der Gesamtmonomermenge aus.

In einer ersten bevorzugten Ausführungsform der Erfindung ist das Monomer M2a alleiniges oder nahezu alleiniges Monomer M2 und macht wenigstens 95 Gew.-% und insbesondere wenigstens 99 Gew.-% der Monomere M2 aus.

Eine spezielle Ausgestaltung der ersten Ausführungsform betrifft Zubereitungen, worin das Copolymer CP als Monomer M2a wenigstens ein erstes monoethylenisch ungesättigtes Monomer M2a(1) und wenigstens ein davon verschiedenes Monomer M2a(2) umfasst. Bei den Monomeren M2a(1) handelt es sich um Monomere mit einer Wasser-löslichkeit bei 20 °C und 1013 mbar von 1 bis < 50 g/l, insbesondere 5 bis 30 g/l. Bevorzugte Monomere M2a(1) sind C₂-C₄-Alkylacrylate und C₁-C₄-Alkylmethacrylate, insbesondere Methylmethacrylat, Ethylacrylat, Ethylmethacrylat, n-Propylacrylat, speziell Methylmethacrylat. Bei den Monomeren M2a(2) handelt es sich um monoethylenisch ungesättigte Monomere mit einer Wasserlöslichkeit bei 20 °C und 1013 mbar von weniger als 1 g/l, insbesondere weniger als 0,5 g/l. Bevorzugte Monomere M2a(2) sind die Ester der Acrylsäure und der Methacrylsäure mit C₆-C₂₀-Alkanolen, insbesondere mit C₈-C₁₈-Alkanolen, wie n-Octylacrylat, n-Octylmethacrylat, Decylacrylat, Decylmethacrylat, Laurylacrylat, Laurylmethacrlyat, Myristylacrylat, Myristylmethacrylat, Cetylacrylat, Cetylmethacrylat, Stearylacrylat und Stearylmethacrylat. Die Mengen an Monomere M2a(1), bezogen auf die Gesamtmenge der Monomere M, beträgt in der Regel 10 bis 98 Gew.-%, insbesondere 20 bis 90 Gew.-%. Die Menge der Monomere M2a(2), bezogen auf die Gesamtmenge der Monomere M, beträgt in der Regel 1 bis 89 Gew.-%, insbesondere 5 bis 60 Gew.-%. Die Menge der Monomere M1 beträgt in dieser Ausführungsform in der Regel 1 bis 89 Gew.-%, insbesondere 5 bis 60 Gew.-%, bezogen auf die Gesamtmenge an Monomere M.

In einer zweiten bevorzugten Ausführungsform der Erfindung umfassen die Monomere M2 neben dem Monomer M2a wenigstens ein Monomer M2b, das bei 20°C in Wasser eine Löslichkeit von wenigstens 50 g/l und insbesondere wenigstens 80 g/l aufweist. Dementsprechend umfassen die das Copolymer CP konstituierenden Monomere M neben dem Monomer M1 sowohl wenigstens eines der zuvor genannten Monomere M2a, insbesondere wenigstens eines der als bevorzugt genannten Monomere M2a und wenigstens eines der zuvor genannten Monomere M2b, insbesondere wenigstens eines der als bevorzugt genannten Monomere M2b.

Häufig wird die Gesamtmenge der Monomere M1 + M2b 90 Gew.-%, insbesondere 80 Gew.-% und speziell 70 Gew.-%, bezogen auf die Gesamtmenge der Monomere M, nicht überschreiten und liegt insbesondere im Bereich von 10 bis 90 Gew.-%, insbesondere im Bereich von 20 bis 80 Gew.-% und speziell im Bereich von 30 bis 70 Gew.-%, bezogen auf die Gesamtmenge der Monomere M. Dementsprechend machen die Monomere M2a häufig wenigstens 10 Gew.-%, insbesondere wenigstens 20 Gew.-% und speziell wenigstens 30 Gew.-%, z.B. 10 bis 90 Gew.-%, insbesondere 20 bis 80 Gew.-%, und speziell 30 bis 70 Gew.-%, bezogen auf die Gesamtmenge der Monomere M, aus.

in dieser zweiten, besonders bevorzugten Ausführungsform machen die Monomere M1 vorzugsweise 1 bis 80 Gew.-%, insbesondere 2 bis 70 Gew.-% und besonders bevorzugt 5 bis 60 Gew.-%, die Monomere M2a vorzugsweise 10 bis 90 Gew.-%, insbesondere 20 bis 80 Gew.-% und besonders bevorzugt 30 bis 70 Gew.-%, und die Monomere M2b vorzugsweise 5 bis 89 Gew.-%, insbesondere 10 bis 78 Gew.-% und besonders bevorzugt 20 bis 65 Gew.-%, bezogen auf die Gesamtmenge der Monomere M aus. Hierunter besonders bevorzugt sind Copolymere CP, deren konstituierende Monomere M als Monomere M1 wenigstens ein Monomer der Formel I, als Monomere M2a wenigstens ein unter Estern der Acrylsäure mit C₂-C₁₀-Alkanolen und Estern der Methacrylsäure mit C₁-C₁₀-Alkanolen ausgewähltes Monomer und als Monomere M2b wenigstens ein unter Hydroxy-C₂-C₄-alkylestern der Acrylsäure und der Methacrylsäure ausgewähltes Monomer umfassen.

In einer dritten bevorzugten Ausführungsform der Erfindung umfassen die das Copolymer CP konstituierenden Monomere als Monomere M2 Methylacrylat oder eine Mischung von Methylacrylat mit wenigstens einem der vorgenannten Monomere M2b. Der Anteil an Monomere M1, bezogen auf die Gesamtmonomermenge, liegt in den oben genannten Bereichen und beträgt in der Regel 1 bis 90 Gew.-%, insbesondere 2 bis 80 Gew.-%, und speziell 5 bis 60 Gew.-%. Der Gesamtanteil an Methylacrylat und der gegebenenfalls eingesetzten Monomere M2b beträgt in der Regel 10 bis 99 Gew.-%, insbesondere 20 bis 98 Gew.-% und speziell 40 bis 95 Gew.-%, bezogen auf die Gesamtmenge der Monomere M. Bezüglich bevorzugter Monomere M2b gilt das zuvor Gesagte. In Mischungen von Methylacrylat mit Monomeren M2b liegt das Gewichtsverhältnis von Methylacrylat: Monomer M2b typischerweise im Bereich 10:1 bis 1:1, insbesondere 5:1 bis 1,2:1.

Daneben können die das Copolymer konstituierenden Monomere M noch weitere, von den Monomeren M1 und M2 verschiedene Monomere M3 umfassen. Der Anteil der Monomere M3 an der Gesamtmenge der Monomere M macht vorzugsweise nicht mehr als 40 Gew.-%, insbesondere nicht mehr als 20 Gew.-% aus. In einer bevorzugten Ausführungsform umfassen die Monomere keine oder nicht mehr als 3 Gew.-%, speziell nicht mehr als 1 Gew.-% von den Monomeren M1 und M2 verschiedene Monomere M3.

Zu den Monomeren M3 zählen monoethylenisch ungesättigte Monomere mit wenigstens einer Carbonsäuregruppe, insbesondere monoethylenisch ungesättigte Mono-und Dicarbonsäuren mit 3 bis 6 C-Atomen (Monomere M3a) wie Acrylsäure, Methacrylsäure, Vinylessigsäure, Crotonsäure, Fumarsäure, Maleinsäure, Itaconsäure, und dergleichen, und die Anhydride der vorgenannten monoethylenisch ungesättigten Dicarbonsäuren, wobei der Anteil der Monomere M3a in der Regel 20 Gew.-% und insbesondere 10 Gew.-%, bezogen auf die Gesamtmonomermenge M nicht überschreitet.

Zu den Monomeren M3 zählen weiterhin mehrfach ethylenisch ungesättigte Monomere (M3b). Der Anteil derartiger Monomere M3 wird in der Regel nicht mehr als 2 Gew.-% und insbesondere nicht mehr als 0,5 Gew.-%, bezogen auf die Gesamtmonomermenge M betragen: Beispiele hierfür sind Vinyl- und Allylester monoethylenisch ungesättigter Carbonsäuren wie Allylacrylat und Allylmethacrylat, Di- und Polyacrylate von Di- oder Polyolen wie Ethylenglykoldiacrylat, Ethylenglykoldimethacrylat, Butandioldiacry- lat, Butandioldimethacrylat, Hexandioldiacrylat, Hexandioldimethacrylat, Triethylenglykoldiacrylat, Triethylenglykoltrimethacrylat, Tris(hydroxymethyl)ethantriacrylat und - trimethacrylat, Pentaerythrittriacrylat und -trimethacrylat, ferner die Allyl- und Methallylester von polyfunktionellen Carbonsäuren, wie Diallylmaleat, Diallylfumarat, Diallylphthalat. Typische Monomere M3b sind auch Verbindungen, wie Divinylbenzol, Divinylharnstoff, Diallylharnstoff, Triallylcyanurat, N,N'-Divinyl- und N,N'-Diallylimidazolidin-2-on, sowie Methylenbisacrylamid und Methylenbismethacrylamid.

Für die erfindungsgemäßen Zubereitungen sind weiterhin Copolymere CP bevorzugt, die ein zahlenmittleres Molekulargewicht Mₙ im Bereich von 1000 bis 500000 Dalton, häufig im Bereich von 1500 bis 100000 Dalton, insbesondere 2000 bis 50000 Dalton und speziell 5000 bis 20000 Dalton aufweisen. Das gewichtsmittlere Molekulargewicht liegt häufig im Bereich von 2000 bis 1000000 Dalton, häufig im Bereich von 3000 bis 200000 Dalton, insbesondere 4000 bis 100000 Dalton und speziell 10000 bis 50000 Dalton. Das Verhältnis M_{w}/Mₙ liegt häufig im Bereich von 1,1:1 bis 10:1, insbesondere im Bereich von 1,2:1 bis 5:1. Die Molmassen M_{w} und Mₙ sowie die Uneinheitlichkeit der Polymere werden durch Größenausschlusschromatographie (= Gelpermeationschromatographie oder kurz GPC) bestimmt. Als Kalibrationsmaterial können handelsübliche Polymethylmethacylat (PMMA)-Eichsätze verwendet werden.

In der Regel wird das in den erfindungsgemäßen Zubereitungen enthaltene Copolymerisat eine Glasübergangstemperatur T_{g} im Bereich von -80 bis 160°C und häufig im Bereich von -40°C bis +100°C aufweisen. Unter der Glasübergangstemperatur T_{g} wird hier die gemäß ASTM D 3418-82 durch Differentialthermoanalyse (DSC) ermittelte "midpoint temperature" verstanden (vgl. Ullmann's Encyclopedia of Industrial Chemistry, 5th Edition, Volume A 21, VCH Weinheim 1992, S. 169 sowie Zosel, Farbe und Lack 82 (1976), S. 125-134, siehe auch DIN 53765).

In diesem Zusammenhang erweist es sich als hilfreich, die Glasübergangstemperatur T_{g} des Copolymeren CP mit Hilfe der Gleichung von Fox (T.G. Fox, Bull. Am. Phys. Soc. (Ser. II) 1, 123 [1956] und Ullmanns Enzyklopädie der technischen Chemie, Weinheim (1980), S. 17-18) anhand der Glasübergangstemperatur der jeweiligen Homopolymere der das Polymer konstituierenden Monomere M abzuschätzen. Letztere sind z. B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed., J. Wiley, New York 1989 bekannt.

Die in den erfindungsgemäßen Zubereitungen enthaltenen Copolymere CP sind zum Teil aus der WO2005/046328 bekannt oder können nach üblichen Methoden durch radikalische Polymerisation der Monomere M hergestellt werden. Die Polymerisation kann durch freie radikalische Polymerisation oder durch kontrollierte radikalische Polymerisationsverfahren erfolgen. Die Polymerisation kann unter Einsatz eines oder mehrerer Initiatoren und als Lösungspolymerisation, als Emulsionspolymerisation, als Suspensionspolymerisation oder als Fällungspolymerisation oder auch in Substanz durchgeführt werden. Die Polymerisation kann als Batchreaktion, in semikontinuierlicher oder kontinuierlicher Fahrweise durchgeführt werden.

Die Reaktionszeiten liegen im Allgemeinen im Bereich zwischen 1 und 12 Stunden. Der Temperaturbereich, in dem die Reaktionen durchgeführt werden können, reicht im Allgemeinen von 20 bis 200°C, bevorzugt von 40 bis 120°C. Der Polymerisationsdruck ist von untergeordneter Bedeutung und kann im Bereich von Normaldruck oder leichtem Unterdruck, z.B. > 800 mbar oder bei Überdruck, z.B. bis 10 bar erfolgen, wobei höhere oder niedrigere Drücke ebenfalls angewendet werden können.

Als Initiatoren für die radikalische Polymerisation werden übliche radikalbildende Substanzen eingesetzt. Bevorzugt sind Initiatoren aus der Gruppe der Azoverbindungen, der Peroxidverbindungen oder der Hydroperoxidverbindungen. Beispielsweise seien genannt Acetylperoxid, Benzoylperoxid, Lauroylperoxid, tert-Butylperoxy-isobutyrat, Caproylperoxid, Cumolhydroperoxid, 2,2'-Azobis-isobutyronitril, 2,2'-Azobis(2-methyl-butyronitril), 2,2'-Azobis[2-methyl-N-(2-hydroxyethyl)propionamid], 1,1'-Azobis(1-cyclo-hexancarbonitril), 2,2'-Azobis(2,4-dimethylvaleronitril), 2,2'-Azobis(N,N'-dimethyleniso-butyroamidin). Besonders bevorzugt ist Azobisisobutyronitril (AIBN). Üblicherweise setzt man den Initiator in einer Menge von 0,02 bis 5 Gew.-% und insbesondere 0,05 bis 3 Gew.-%, bezogen auf die Menge der Monomere M ein. Die optimale Menge an Initiator hängt naturgemäß von dem eingesetzten Initiatorsystem ab und kann vom Fachmann in Routineexperimenten ermittelt werden. Der Initiator kann teilweise oder vollständig im Reaktionsgefäß vorgelegt werden. Vorzugsweise gibt man die Hauptmenge des Initiators, insbesondere wenigstens 80 %, z. B. 80 bis 100 % des Initiators im Verlauf der Polymerisation in den Polymerisationsreaktor.

Selbstverständlich kann das Molekulargewicht der Copolymere CP durch Zugabe von Reglern in einer geringen Menge, z. B. 0,01 bis 5 Gew.-%, bezogen auf die polymerisierenden Monomere M, eingestellt werden. Als Regler kommen insbesondere organische Thioverbindungen z.B. Mercaptoalkohole wie Mercaptoethanol, Mercaptocarbonsäuren wie Thioglykolsäure, Mercaptopropionsäure, Alkylmercaptane wie Dodecylmercaptan, ferner Allylalkohole und Aldehyde in Betracht.

Insbesondere erfolgt die Herstellung der Copolymere CP durch radikalische Lösungspolymerisation in einem Lösungsmittel. Beispiele für Lösungsmittel sind Wasser, Alkohole, wie z.B. Methanol, Ethanol, n-Propanol und Isopropanol, dipolar-aprotische Lösungsmittel, z.B. N-Alkyllactame wie N-Methylpyrrolidon (NMP), N-Ethylpyrrolidon, weiterhin Dimethylsulfoxid (DMSO), N,N-Dialkylamide aliphatischer Carbonsäuren wie N,N-Dimethylformamid (DMF), N,N-Dimethylacetamid, weiterhin aromatische, aliphatische und cycloaliphatische Kohlenwasserstoffe, die halogeniert sein können wie Hexan, Chlorbenzol, Toluol oder Benzol. Bevorzugte Lösungsmittel sind Isopropanol, Methanol, Toluol, DMF, NMP, DMSO und Hexan, besonders bevorzugt ist DMF.

Die erfindungsgemäßen Zubereitungen können in fester Form oder in flüssiger Form formuliert sein. Je nach Ausgestaltung können die erfindungsgemäßen Zubereitungen noch Hilfsmittel und/oder Träger enthalten, wie sie in Pflanzenschutzmitteln oder in Mitteln für den Materialschutz üblich sind. Zu den Hilfsmitteln zählen insbesondere konventionelle oberflächenaktive Substanzen und sonstige im Pflanzen- und Materialschutz übliche Additive und Trägerstoffe, die fest oder flüssig sein können. Zu den oberflächenaktiven Substanzen zählen insbesondere Tenside, insbesondere solche, die Netzmitteleigenschaften haben. Zu den sonstigen Hilfsmitteln (Additive) zählen insbesondere Verdickungsmittel, Entschäumer, Konservierungsmittel, Frostschutzmittel, Stabilisierungsmittel, Anticaking-Mittel bzw. Rieselhilfsmittel und Puffer.

Prinzipiell brauchbare konventionelle oberflächenaktive Substanzen sind anionische, nichtionische und amphotere Tenside, einschließlich Polymer-Tenside, wobei das Molekulargewicht der Tenside typischerweise einen Wert von 2000 Dalton und insbesondere 1000 Dalton nicht überschreiten wird (Zahlenmittel).

Zu den anionischen Tensiden gehören beispielsweise Carboxylate, insbesondere Alkali-, Erdalkali- und Ammoniumsalze von Fettsäuren, z. B. Kaliumstearat, die üblicherweise auch als Seifen bezeichnet werden; Acylglutamate; Sarkosinate, z. B. Natriumlauroylsarkosinat; Taurate; Methylcellulosen; Alkylphosphate, insbesondere Mono- und Diphosphorsäurealkylester; Sulfate, insbesondere Alkylsulfate und Alkylethersulfate; Sulfonate, weitere Alkyl- und Alkylarylsulfonate, insbesondere Alkali-, Erdalkali- und Ammoniumsalze von Arylsulfonsäuren sowie alkylsubstituierten Arylsulfonsäuren, AIkylbenzolsulfonsäuren, wie beispielsweise Lignin- und Phenolsulfonsäure, Naphthalin- und Dibutylnaphthalinsulfonsäuren, oder Dodecylbenzolsulfonate, Alkylnaphthalinsulfonate, Alkylmethylestersulfonate, Kondensationsprodukte von sulfoniertem Naphthalin und Derivaten davon mit Formaldehyd, Kondensationsprodukte von Naphthalinsulfonsäuren, Phenol- und/oder Phenolsulfonsäuren mit Formaldehyd oder mit Formaldehyl und Harnstoff, Mono- oder Dialkylbernsteinsäureestersulfonate; sowie Eiweißhydrolysate und Lignin-Sulfitablaugen. Die zuvor genannten Sulfonsäuren werden vorteilhafterweise in Form ihrer neutralen oder gegebenenfalls basischen Salze verwendet.

Zu den nichtionischen Tensiden gehören beispielsweise:
- Fettalkoholalkoxylate und Oxoalkoholalkoxylate, insbesondere Ethoxylate und Propoxylate mit Alkoxylierungsgraden von üblicherweise 2 bis 100 und insbesondere 3 bis 50, z. B. Alkoxylate von C₈-C₃₀-Alkanolen oder Alk(adi)enolen, z.B. von iso-Tridecylalkohol, Laurylalkohol, Oleylalkohol oder Stearylalkohol sowie deren C₁-C₄-Alkylether und C₁-C₄-Alkylester z.B. deren Acetate;
- alkoxylierte tierische und/oder pflanzliche Fette und/oder Öle, beispielsweise Maisölethoxylate, Rizinusölethoxylate, Talgfettethoxylate,
- Glycerinester, wie beispielsweise Glycerinmonostearat,
- Alkylphenolalkoxylate, wie beispielsweise ethoxyliertes iso-Octyl-, Octyl- oder Nonyl-phenol, Tributylphenol-polyoxyethylenether,
- Fettaminalkoxylate, Fettsäureamid- und Fettsäurediethanol-amidalkoxylate, insbesondere deren Ethoxylate,
- Zuckertenside, Sorbitester, wie beispielsweise Sorbitanfettsäureester (Sorbitanmonooleat, Sorbitantristearat), Polyoxy-ethylensorbitanfettsäureester, Alkylpolyglycoside, N-Alkylgluconamide,
- Alkylmethylsulfoxide,
- Alkyldimethylphosphinoxide, wie beispielsweise Tetradecyldimethylphosphinoxid.

Zu den amphoteren Tensiden gehören beispielsweise Sulfobetaine, Carboxybetaine und Alkyldimethylaminoxide, z. B. Tetradecyldimethylaminoxid.

Weitere Tenside, die hier beispielhaft genannt werden sollen, sind Perfluortenside, Silikontenside, Phospholipide, wie beispielsweise Lecithin oder chemisch modifizierte Lecithine, Aminosäuretenside, z. B. N-Lauroylglutamat.

Sofern nicht spezifiziert, handelt es sich bei den Alkylketten der oben aufgeführten Tenside um lineare oder verzweigte Reste mit üblicherweise 6 bis 30 und insbesondere 8 bis 20 Kohlenstoffatomen.

In einer Ausführungsform enthalten die erfindungsgemäßen wässrigen Zubereitungen nicht mehr als 10 Gew.-%, vorzugsweise nicht mehr als 5 Gew.-% und insbesondere nicht mehr als 3 Gew.-%, z. B. 0,01 bis 5 Gew.-% oder 0,1 bis 3 Gew.-% an konventionellen oberflächenaktiven Substanzen, jeweils bezogen auf die Gesamtmenge an Wirkstoff und Copolymer CP.

Je nach Anwendung kann es jedoch von Vorteil sein, wenn die erfindungsgemäßen Wirkstoffzubereitungen mit oberflächenaktiven Substanzen formuliert werden. Dann liegt der Anteil an konventioneller oberflächenaktiver Substanz häufig im Bereich von 0,1 bis 60 Gew.-%, insbesondere im Bereich von 0,5 bis 50 Gew.-%, bezogen auf die Gesamtmenge an Wirkstoff und Copolymer CP, bzw. im Bereich von 0,1 bis 60 Gew.-%, insbesondere im Bereich von 0,5 bis 50 Gew.-% und speziell im Bereich von 0,5 bis 30 Gew.-%, bezogen auf das Gesamtgewicht der formulierten Zubereitung.

Auch wenn ein Vorteil der erfindungsgemäßen Zubereitungen ihr geringer Gehalt an flüchtigen organischen Substanzen ist, kann es für einige Anwendungen erwünscht sein, die erfindungsgemäßen Zubereitungen mit organischen Lösungsmitteln, Ölen und Fetten, vorzugsweise solchen Lösungsmitteln oder Ölen und Fetten, die umweltverträglich oder biokompatibel sind, z.B. die vorgenannten mit Wasser mischbaren Lösungsmittel oder Lösungsmittel, Ölen oder Fetten die mit Wasser nicht oder nur sehr begrenzt mischbar sind, abzumischen. Hierzu zählen z. B.:
- Paraffinöle, aromatische Kohlenwasserstoffe und aromatische Kohlenwasserstoffgemische, z. B Xylole, Solvesso 100, 150 oder 200, und dergleichen,
- Phenole und Alkylphenole, z.B. Phenol, Hydrochinon, Nonylphenol, etc.
- Ketone mit mehr als 4 C-Atomen wie Cyclohexanon, Isophoron, Isopheron, Acetophenon, Acetonaphthon,
- Alkohole mit mehr als 4 C-Atomen wie acetylierter Lanolinalkohol, Cetylalkohol, 1-Decanol, 1-Heptanol, 1-Hexanol, Isooctadecanol, Isopropylalkohol, Oleylalkohol, Benzylalkohol,
- Carbonsäureester, z.B. Adipinsäuredialkylester wie Adipinsäurebis(2-ethylhexyl)ester, Phthalsäuredialkylester wie Phthalsäurebis(2-ethylhexyl)ester, Essigsäurealkylester (auch verzweigte Alkylgruppen) wie Ethylacetat und Acetoessigsäureethylester, Stearate wie Butylstearat, Glycerinmonostearat, Citrate wie Acetyltributylcitrat, weiterhin Cetyloctanoat, Methyloleat, Methyl-p-hydroxybenzoat, Methyltetradecanoat, Propyl-p-hydroxybenzoat, Methylbenzoat, Milchsäureester wir Isopropyllacttat, Butyllactat und 2-Ethylhexyllactat,
- Pflanzenöle wie Palmöl, Rapsöl, Rizinusöl und Derivate davon wie z.B. oxydiert, Kokusnussöl, Lebertran, Maiskeimöl, Sojabohnenöl, Leinsamenöl, Olivenöl, Erdnussöl, Färberdistelöl, Sesamsamenöl, Grapefruitöl, Basilikumöl, Aprikosenöl, Ingweröl, Geranienöl, Orangenöl, Rosmarienöl, Macadamiaöl, Zwiebelöl, Mandarinenöl, Kiefernöl, Sonnenblumenöl,
- hydrogenierte Pflanzenöle wie hydrogeniertes Palmöl, hydrogeniertes Rapsöl, hydrogeniertes Sojabohnenöl,
- tierische Öle wie Schweinefettöl, Fischöle,
- Dialkylamide mittel bis langkettiger Fettsäuren z. B. Hallcomide sowie
- Pflanzenölester wie Rapsölmethylester.

Geeignete Verdicker sind Verbindungen, die wässrigen Zubereitungen ein pseudoplastisches Fließverhalten verleihen, d. h. hohe Viskosität im Ruhezustand und niedrige Viskosität im bewegten Zustand. Hier sind beispielsweise Polysaccharide wie Xanthan (Kelzan^{®} der Fa. Kelco; Rhodopol^{®} 23 von Rhone Poulenc; oder Veegum^{®} der Firma R.T. Vanderbilt) sowie anorganische Schichtmineralien wie Attaclay^{®} (Firma Engelhardt) zu nennen, wobei Xanthan bevorzugt verwendet wird.

Als für die erfindungsgemäßen Dispersionen geeignete Antischaummittel kommen beispielsweise Silikonemulsionen (wie z. B. Silikon^{®} SRE, Firma Wacker oder Rhodorsil^{®} der Firma Rhodia), langkettige Alkohole, Fettsäuren, fluororganische Verbindungen und deren Gemische in Betracht.

Bakterizide können zur Stabilisierung den erfindungsgemäßen Zubereitungen gegen Befall mit Mikroorganismen zugesetzt werden. Hierbei handelt es sich typischerweise um Isothiazolon-Verbindungen, z.B. 1,2-Benzisothiazolin-3-on, 5-Chlor-2-methylisothiazol-3-on, 2-Methylisothiazol-3-on oder 2-Octylisothiazol-3-on, die beispielsweise unter den Handelsbezeichnungen Proxel^{®} der Fa. Arch Chemical Inc., Acticide^{®} RS der Fa. Thor Chemie und Kathon^{®} MK der Firma Rohm & Haas erhältlich sind.

Geeignete Frostschutzmittel sind organische Polyole, z. B. Ethylenglycol, Propylenglycol oder Glycerin. Diese werden in wässrigen Formulierungen eingesetzt, üblicherweise in Mengen von nicht mehr als 20 Gew.-%, z.B. 1 bis 20 Gew.-% und insbesondere 2 bis 10 Gew.-%, bezogen auf das Gesamtgewicht der wässrigen Wirkstoffzubereitung.

Gegebenenfalls können die erfindungsgemäßen Wirkstoffzubereitungen 1 bis 5 Gew.-%, bezogen auf die Gesamtmenge der hergestellten Zubereitung, Puffer zur pH-Wert Regulation der Zubereitung oder der verdünnten Applikationsform enthalten, wobei sich die Menge und Art des eingesetzten Puffers nach den chemischen Eigenschaften und der Menge der Wirkstoffe und des Polymers CP richtet. Beispiele für Puffer sind Alkalisalze schwacher anorganischer oder organischer Säuren wie z. B. Phosphorsäure, Borsäure, Essigsäure, Propionsäure, Citronensäure, Fumarsäure, Weinsäure, Oxalsäure und Bernsteinsäure.

Beispiele für Rieselhilfsmittel sind insbesondere Kieselsäure, speziell pyrogene Kieselsäure und Fällungskieselsäure sowie Calciumcarbonat und Magnesiumstearat. Die Menge an Rieselhilfsmittel beträgt, sofern vorhanden, typischerweise bis 5 Gew.-%, insbesondere bis 2 Gew.-%, z.B. 0,1 bis 5 Gew.-% oder 0,2 bis 2 Gew.-%, bezogen auf das Gesamtgewicht der Zusammensetzung.

Als Trägerstoffe kommen grundsätzlich alle flüssigen und festen Substanzen in Betracht, die üblicherweise in Formulierungen für den Pflanzenschutz oder Materialschutz, insbesondere in Formulierungen von Fungiziden zum Einsatz kommen und die typischerweise chemisch inert sind. Flüssige Trägerstoffe sind insbesondere Wasser sowie Mischungen von Wasser mit organischen, mit Wasser mischbaren Lösungsmitteln. Feste Trägerstoffe sind z.B. Silikate und Alumosilikate einschließlich Bolus, Löß, Tone und Tonerden, z.B. Phyllosilikate und Tektosilikate wie Montmorillonit, Hektorit, Saponit, Beidellit, Sauconit, Bentonit, Talk, Kaolin, Attapulgit, weiterhin amorphe Silikate und Kieselsäuren wie Kieselgele, Kieselgur, z.B. in Form von Diatomeenerde, Fällungskieselsäure, künstliche Silikate und Alumosilikate wie Zeolithe, weiterhin Kalkstein, Kalk, Kreide, Dolomit, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe. Vorzugsweise sind die festen Trägerstoffe in Wasser löslich oder dispergierbar.

Eine weitere bevorzugte Ausführungsform der Erfindung betrifft Zubereitungen in fester Form. Der Gesamtmenge an Wirkstoff (Wirkstoff 1 + Wirkstoff 2) liegt in der Regel im Bereich von 5 bis 90 Gew.-%, insbesondere 10 bis 70 Gew.-% und speziell 15 bis 60 Gew.-%, bezogen auf das Gesamtgewicht der Zubereitung. Der Anteil an Copolymer CP beträgt üblicherweise 5 bis 95 Gew.-%, insbesondere 10 bis 90 Gew.-% und speziell 20 bis 85 Gew.-%, bezogen auf das Gesamtgewicht der Zubereitung. Der Anteil an Hilfsmitteln und festen Trägerstoffen kann bis zu 90 Gew.-%, insbesondere bis 80 Gew.-% und speziell bis 65 Gew.-% der erfindungsgemäßen festen Zubereitung ausmachen. Es versteht sich von selber, dass in den festen Formulierungen der Anteil an flüssigen, von Wirkstoff 1 und 2 verschiedenen Bestandteilen, insbesondere flüssigen Lösungsmittelbestandteilen in der Regel nicht mehr als 20 Gew.-% der Formulierung, insbesondere nicht mehr als 10 Gew.-% und speziell nicht mehr als 1 Gew.-% ausmacht.

Die festen Zubereitungen können in unterschiedlichen makroskopischen Formen vorliegen. Als Beispiele für makroskopische Formen seien Pulver, wie sie beispielsweise durch Sprühtrocknung oder Gefriertrocknung flüssiger Formulierungen erhalten werden, Mahlgut, Granulate, Agglomerate oder auch Film genannt. Bevorzugt sind Pulver.

Eine erste Ausgestaltung fester Zubereitungen sind solche, die im wesentlichen keinen festen Träger enthalten und die im wesentlichen, d.h. zu wenigstens 95 % und insbesondere zu wenigstens 99 % aus den Wirkstoffen 1 und 2, dem Polymeren CP sowie gegebenenfalls festen, vorzugsweise in Wasser löslichen Hilfsstoffen bestehen. In diesen Formulierungen liegt die Gesamtmenge an Wirkstoff (Wirkstoff 1 + Wirkstoff 2) in der Regel im Bereich von 5 bis 90 Gew.-%, insbesondere 10 bis 70 Gew.-% und speziell 15 bis 60 Gew.-%, bezogen auf das Gesamtgewicht der Zubereitung. Der Anteil an Copolymer CP beträgt üblicherweise 5 bis 95 Gew.-%, insbesondere 10 bis 90 Gew.-% und speziell 20 bis 85 Gew.-%, bezogen auf das Gesamtgewicht der festen, trägerfreien Zubereitung. Der Anteil an Hilfsmitteln kann bis zu 60 Gew.-%, insbesondere bis 80 Gew.-% und speziell bis 65 Gew.-% der erfindungsgemäßen festen Zubereitung ausmachen. Sofern die festen Zubereitungen als Pulver vorliegen, können Sie ein Rieselhilfsmittel in den oben genannten Mengen aufweisen. Der Anteil fester, inerter Träger beträgt vorzugsweise nicht mehr als 5 Gew.-%, insbesondere nicht mehr als 1 Gew.-%.

Eine zweite Ausgestaltung fester Zubereitungen sind solche, die neben den Wirkstoffen 1 und 2, dem Polymeren CP sowie gegebenenfalls festen, vorzugsweise in Wasser löslichen Hilfsstoffen wenigstens einen festen Träger aufweisen. In diesen Formulierungen liegt die Gesamtmenge an Wirkstoff (Wirkstoff 1 + Wirkstoff 2) in der Regel im Bereich von 5 bis 80 Gew.-%, insbesondere 10 bis 60 Gew.-% und speziell 15 bis 50 Gew.-%, bezogen auf das Gesamtgewicht der Zubereitung. Der Anteil an Copolymer CP beträgt üblicherweise 5 bis 85 Gew.-%, insbesondere 10 bis 70 Gew.-% und speziell 20 bis 65 Gew.-%, bezogen auf das Gesamtgewicht der festen, trägerfreien Zubereitung. Der Anteil an Trägermaterial beträgt typischerweise 10 bis 90 Gew.-%, 20 bis 80 Gew.-% und insbesondere 30 bis 65 Gew.-%, bezogen auf das Gesamtgewicht der Zusammensetzung. Der Anteil an Hilfsmitteln kann bis zu 80 Gew.-%, insbesondere bis 70 Gew.-% und speziell bis 55 Gew.-% der erfindungsgemäßen festen Zubereitung ausmachen. Sofern die festen Zubereitungen als Pulver vorliegen, können Sie ein Rieselhilfsmittel in den oben genannten Mengen aufweisen. Bevorzugte Trägermaterialien sind Silikate, z.B. Phyllosilikate einschließliche Tone wie Montmorillonit, Hektorit, Saponit, Beidellit, Sauconit, Bentonit, Talk, weiterhin amorphe Silikate und Kieselsäuren wie Kieselgele, Kieselgur, z.B. in Form von Diatomeenerde, Fällungskieselsäure, künstliche Silikate wie Zeolithe.

In einer anderen Ausführungsform handelt es sich bei der erfindungsgemäßen Zubereitung um eine flüssige oder insbesondere eine wässrige Zubereitung. Neben den Bestandteilen Wirkstoff 1, Wirkstoff 2 und Copolymer CP enthalten derartige Zubereitungen noch einen flüssigen Träger, insbesondere Wasser oder eine Mischung von Wasser mit einem mit Wasser mischbaren organischen Lösungsmittel, wobei der Anteil organischer Lösungsmittel vorzugsweise 20 Gew.-%, bezogen auf das Gesamtgewicht der Zusammensetzung nicht überschreitet.

Beispiele für mit Wasser mischbare organische Lösungsmittel sind C₃-C₄-Ketone wie Aceton und Methylethylketon, cyclische Ether wie Dioxan und Tetrahydrofuran, C₁-C₄-Alkanole wie Methanol, Ethanol, n-Propanol, Isopropanol, n-Butanol, tert.-Butanol, Polyole und deren Mono- und Dimethylether wie Glykol, Propandiol, Ethylenglykolmonomethylether, Diethylenglykol, Diethylenglykolmonomethylether, Diethylenglykoldimethylether, Glycerin, weiterhin C₂-C₃-Nitrile wie Acetonitril und Propionitril, Dimethylsulfoxid, Dimethylformamid, Formamid, Acetamid, Dimethylacetamid, Butyrolacton, 2-Pyrrolidon und N-Methylpyrrolidon.

In den flüssigen, insbesondere wässrigen Konzentraten (Flüssigformulierungen) liegt die Gesamtmenge an Wirkstoff (Wirkstoff 1 + Wirkstoff 2) in der Regel im Bereich von 1 bis 50 Gew.-%, insbesondere bei 5 bis 40 Gew.-% und speziell bei 7 bis 35 Gew.-%, bezogen auf das Gesamtgewicht der Zubereitung. Der Menge an Copolymer CP beträgt üblicherweise 3 bis 50 Gew.-%, insbesondere 5 bis 45 Gew.-% und speziell 10 bis 40 Gew.-%, bezogen auf das Gesamtgewicht der Zubereitung. Der Anteil an Hilfsmitteln kann bis zu 30 Gew.-%, insbesondere bis 20 Gew.-% und speziell bis 10 Gew.-% der erfindunsgemäßen flüssigen Zubereitung ausmachen. Typische Hilfsmittel für flüssige Zubereitungen sind beispielsweise Verdickungsmittel, Entschäumer, Konservierungsmittel, Frostschutzmittel, Biozide, Mittel zur Einstellung des pH-Werts und oberflächenaktiven Substanzen. Der Feststoffgehalt liegt typischerweise im Bereich von 5 bis 70 Gew.-%, insbesondere 10 bis 60 Gew.-% und speziell 20 bis 55 Gew.-%. Der Anteil an mit Wasser nicht mischbaren flüchtigen Bestandteilen beträgt vorteilhafterweise nicht mehr als 5 Gew.-%, insbesondere nicht mehr als 1 Gew.-%, bezogen auf das Gesamtgewicht der wässrigen Flüssigformulierung.

In den wässrigen Zubereitungen liegen die Wirkstoffe 1 und 2 und das Copolymer CP in der wässrigen Phase in fein verteilter Form vor. Die mittlere Teilchengröße, bestimmt mittels Lichtstreuung liegt in den Konzentraten typischerweise unterhalb 1 µm, insbesondere unterhalb 500 nm und speziell unterhalb 300 nm.

Unter wässriger Phase wird reines Wasser oder Wasser, das gelöste Zusätze z.B. ein Puffersystem oder Salze oder weitere Zusatzstoffe wie beispielsweise mit Wasser mischbare Lösungsmittel enthält, verstanden. Der pH-Wert der wässrigen Phase liegt im allgemeinen im Bereich von 2 bis 13, bevorzugt von 3 bis 12, besonders bevorzugt von 4 bis 10.

Typischerweise enthalten die wässrigen Formulierungen wenigstens eines der oben angegebenen Frostschutzmittel, gegebenenfalls eines oder mehrere der oben angegebenen Biozide, gegebenenfalls einen oder mehrere der oben angegebenen Verdicker, gegebenenfalls ein oder mehrere der oben angegebenen Mittel zur Einstellung des pH-Wertes (Puffer), gegebenenfalls einen oder mehrere der oben angegebenen Entschäumer und gegebenenfalls eine oder mehrere der oben angegebenen oberflächenaktiven Substanzen.

Die Erfindung betrifft weiterhin ein Verfahren zur Herstellung der hier beschriebenen Zubereitungen, das im Folgenden auch Verfahren 1 genannt wird. Dieses Verfahren umfasst typischerweise das innige Vermischen der in den erfindungsgemäßen Zubereitungen enthaltenen Bestandteile nach üblichen Verfahren.

In einer bevorzugten Ausführungsform erreicht man ein inniges Vermischen durch ein Verfahren, umfassend
i) das Bereitstellen einer Lösung des Wirkstoffs 1, des Copolymeren CP und des wenigstens einen weiteren Wirkstoffs 2 in einem organischen Lösungsmittel und anschließend
ii) das weitgehende oder vollständige Entfernen des organischen Lösungsmittels.

Befindet sich das Copolymer CP herstellungsbedingt bereits in einem organischen Lösungsmittel, so wird bevorzugt diese Lösung zur Mischung mit dem Wirkstoff oder der Wirkstofflösung herangezogen.

In einem ersten Schritt des Verfahrens 1 stellt man eine Lösung des Copolymers und des mindestens einen weiteren Wirkstoffes in einem geeigneten organischen Lösungsmittel her. Hierzu wird man in der Regel so vorgehen, dass man eine erste Lösung des Copolymeren CP in einem ersten organischen Lösungsmittel mit einer oder zwei getrennter Lösungen der Wirkstoffe 1 und 2 in einem organischen Lösungsmittel miteinander vermischt, wobei die Lösungen bereits weitere Hilfs- und Zusatzstoffe enthalten können. Auch kann man die Hilfs- und Zusatzstoffe zu einem späteren Zeitpunkt zufügen. Die zur Herstellung der Lösungen verwendeten Lösungsmittel können gleich oder verschieden sein, wobei man typischerweise Lösungsmittel wählen wird, die miteinander mischbare sind. Das Herstellen einer Lösung des Copolymeren CP kann entfallen, wenn die Synthese des Copolymeren CP in einem Lösungsmittel durchgeführt wird, das zum Einsatz im Verfahren zur Herstellung der erfindungsgemäßen Formulierung geeignet ist.

Beispiele für diesen Zweck geeigneter organischer Lösungsmittel sind C₁-C₆-Alkylalkohole wie Methanol, Ethanol, Propanol, Isopropanol, 1-Butanol, 2-Butanol, tert-Butanol, Ester aliphatischer C₁-C₄-Carbonsäuren mit C₁-C₄-Alkanolen wie Ethylacetat, Butylacetat, Ketone mit vorzugsweise 3 bis 6 C-Atomen wie Aceton, Methylethylketon, Methylisopropylketon, Methylisobutylketon, Acetale, Di- C₁-C₄-alkylether wie Diethylether, Methyl-tert.-butylether, cyclische Ether wie Tetrahydrofuran, aliphatische C₁-C₄-Carbonsäuren wie Ameisensäure, Essigsäure, Propionsäure, N-substituierte oder N,N-disubstituierte- C₁-C₄-Carbonsäureamide wie Acetamid, Dimethylformamid (DMF) und Dimethylpropionamid, Lactame wie N-Methylpyrrolidon, Lactone wie beispielsweise Butyrolacton, aliphatische und aromatische Chlorkohlenwasserstoffe wie Methylenchlorid, Chloroform, 1,2-Dichlorethan oder Chlorbenzol, sowie Mischungen der genannten Lösungsmittel. Bevorzugte organische Lösungsmittel sind Methanol, Ethanol, Isopropanol, Dimethylformamid, N-Methylpyrrolidon, Methylenchlorid, Chloroform, 1,2-Dichlorethan, Chlorbenzol, Aceton, Methylethylketon, Methylisopropylketon, Methylisobutylketon, Tetrahydrofuran sowie Mischungen dieser Lösungsmittel. Besonders bevorzugte Lösungsmittel sind Methanol, Ethanol, Isopropanol, Dimethylformamid und Tetrahydrofuran und deren Mischungen.

In einem zweiten Schritt wird/werden das/die Lösungsmittel durch geeignete Verfahren in üblicher Weise weitestgehend entfernt. Übliche Verfahren zur Entfernung von Lösungsmitteln sind beispielsweise Sprühtrocknung, Verdampfen bei erniedrigtem Druck, Gefriertrocknung, Verdampfen unter Atmosphärendruck bei gegebenenfalls erhöhter Temperatur. Zu den für die Trocknung geeigneten Verfahren gehören weiterhin Lyophilisierung oder Trocknen in einem Fließbetttrockner. Man erhält hierdurch die erfindungsgemäßen Wirkstoffformulierungen in fester Form.

Auf diese Weise erhält man in der Regel eine feste, zähflüssige oder gelförmige Zusammensetzung. Sofern nach dem Entfernen des Lösungsmittels ein Feststoff erhalten wird, kann man je nach Trocknungsbedingungen in an sich bekannter Weise feinteilige Pulver oder grobteilige Granulate hergestellt werden, die sich ohne weiteres in Wasser lösen oder dispergieren lassen, ohne dass eine nennenswerte Teilchenvergrößerung eintritt. Auch kann man einen grobteiligen Feststoff herstellen und diesen auf die gewünschte Teilchengröße vermahlen.

Zur Herstellung eines festen Formulierung, die einen Träger enthält, kann man beispielsweise auch so vorgehen, dass man
i) eine oder mehrere separate Lösungen des Wirkstoffs 1, des Copolymeren CP, des wenigstens einen weiteren Wirkstoffs 2 und gegebenenfalls der Hilfsmittel in einem oder mehreren verschiedenen organischen Lösungsmitteln bereitstellt,
ii) diese Lösungen mit dem Träger vermischt oder auf den Träger aufbringt und
iii) das (die) organische(n) Lösungsmittel weitgehend oder vollständig entfernt.

Dieses Verfahren, das im Folgenden auch als Verfahren 2 bezeichnet wird, eignet sich in besonderer Weise dann, wenn ohne Verwendung eines Trägers ein zähflüssiges oder gelförmiges Produkt erhalten wird.

Vorteilhafterweise wird man bei Verfahren 2 so vorgehen, dass man die Lösung(en) auf den Träger durch ein Sprühverfahren, z.B. durch ein Sprühtrocknungs- oder Sprühgranulierungsverfahren auf den Träger aufbringt, wobei gleichzeitig das (die) Lösungsmittel verdampft wird (werden). Die Hilfsmittel können ebenfalls auf diese Weise auf den Träger aufgebracht werden oder zu einem späteren Zeitpunkt zugegeben werden.

Bezüglich der Lösungen der Wirkstoffe 1 und 2, des Copolymeren CP und der Hilfsstoffe gilt grundsätzlich das zuvor für Verfahren 1 Gesagte analog.

Die Herstellung wässriger erfindungsgemäßer Zubereitungen umfasst typischerweise das Einarbeiten der Wirkstoffe 1 und 2, des Copolymeren CP und etwaiger Hilfsmittel in ein wässriges Dispergiermedium. Das Verfahren kann beispielsweise die folgenden Schritte umfassen:
i) Bereitstellen einer Lösung, enthaltend die Wirkstoffe 1 und 2, das Copolymere CP und gegebenenfalls einen Teil oder die Gesamtmenge der Hilfsstoffe in einem vorzugsweise mit Wasser mischbaren organischen Lösungsmittel, eine Schmelze der vorgenannten Bestandteile oder ein Pulver aus den vorgenannten Bestandteilen,
ii) Einarbeiten der Lösung, der Schmelze oder des Pulvers in ein wässriges Dispergiermedium und
iii) sofern anwesend, weitgehendes oder vollständiges Entfernen des organischen Lösungsmittels.

Zur Herstellung der erfindungsgemäßen wässrigen Zubereitungen wird man wahlweise die in Schritt i) erhaltene Lösung oder Schmelze oder das Pulver in Wasser oder einem wässrigen Medium dispergieren. Unter einem wässrigen Medium versteht man Wasser, eine wässrige Lösung von oberflächenaktiven Substanzen sowie Mischungen von Wasser mit organischen Lösungsmitteln, die mit Wasser mischbar sind, wobei der Anteil derartiger Lösungsmittel typischerweise nicht mehr als 20 Vol.-%, bezogen auf die Gesamtmenge aus Wasser und Lösungsmittel ausmacht.

Das Dispergieren erfolgt üblicherweise durch Anwendung von Scherkräften, z.B. durch hochfrequentes und hochamplitudiges Schütteln oder hochfrequentes Rühren, Turbinieren oder durch Verwendung einer Mischkammer. Das Dispergieren kann in kontinuierlicher oder diskontinuierlicher Art und Weise erfolgen. Bevorzugt ist kontinuierliches Dispergieren. Das Dispergieren kann gegebenenfalls unter Anwendung erhöhter Temperatur und/oder erhöhtem Druck erfolgen.

Vorzugsweise ist das zur Herstellung der Lösung eingesetzte organische Lösungsmittel mit Wasser mischbar. Mischbar mit Wasser bedeutet in diesem Zusammenhang, dass die organischen Lösungsmittel unter den Mischungsbedingungen ohne Phasenseparation zu mindestens 10 Gew.-%, bevorzugt zu 15 Gew.-%, besonders bevorzugt zu 20 Gew.-% mit Wasser mischbar sind. Beispiele für mit Wasser mischbare organische Lösungsmittel sind die zuvor genannten, insbesondere cyclische Ether wie Tetrahydrofuran.

Sofern man eine Lösung der Wirkstoffe 1 und 2 und des Copolymeren CP in Wasser dispergiert hat, wird man dann das organische Lösungsmittel weitgehend oder vollständig entfernen. Dies geschieht typischerweise auf destillativem Wege, wobei man üblicherweise abdestilliertes Wasser sukzessive ersetzt.

In einem anderen, ebenfalls bevorzugten Verfahren umfasst die Herstellung wässriger erfindungsgemäßer Zubereitungen die folgenden Schritte:
i) Bereitstellen einer wässrigen Lösung, enthaltend das Copolymer CP,
ii) Bereitstellen einer oder zweier separater Lösungen, enthaltend Wirkstoff 1 und den wenigstens einen weiteren Wirkstoff 2 in einem oder mehreren mit Wasser mischbaren organischen Lösungsmitteln,
iii) Vermischen der wässrigen Lösung des Copolymeren CP mit der(den) Lösung(en) der Wirkstoffe 1 und 2, und
iv) weitgehendes oder vollständiges Entfernen des (der) organischen Lösungsmittel(s).

In einem ersten Schritt werden das Copolymer CP und gegebenenfalls weitere Zusatzstoffe in einem wässrigen Lösungsmittelsystem gelöst. Wird herstellungsbedingt bereits eine wässrige Lösung des Copolymers erhalten, so wird bevorzugt diese wässrige Lösung zur Mischung mit der Wirkstofflösung herangezogen. Des Weiteren werden Wirkstoff 1 und Wirkstoff 2 in einem mit Wasser mischbaren Lösungsmittel gegebenenfalls unter Hinzufügen weiterer Hilfsstoffe gelöst. Die wässrige Lösung des Copolymeren CP wird dann mit der Lösung von Epoxiconazol und dem Wirkstoff 2 gemischt.

Vorteilhaft erfolgt das Vermischen unter Energieeintrag wie beispielsweise durch Anwendung von Scherkräften, durch hochfrequentes und hochamplitudiges Schütteln oder hochfrequentes Rühren, Turbinieren oder durch Verwendung einer Mischkammer. Das Mischen kann in kontinuierlicher oder diskontinuierlicher Art und Weise erfolgen. Bevorzugt ist kontinuierliches Mischen. Die auf diese Art erhaltene Dispersion kann in üblicher Weise wie oben ausgeführt von den Lösungsmitteln befreit werden.

Die erfindungsgemäßen Zubereitungen zeichnen sich zum einen dadurch aus, dass sie beim Verdünnen mit Wasser eine äußerst feinteilige Verteilung der dispergierten Wirkstoffphase gewährleisten, wobei die mittlere Teilchengröße der dispergierten Wirkstoffphase in den oben angegebenen Bereichen liegt. Die erfindungsgemäßen Wirkstoffzubereitungen verlieren diese Eigenschaften auch bei längerer Lagerung und/oder Lagerung bei erhöhter Temperatur nicht. Die Verwendung weiterer oberflächenaktiver Verbindungen ist hierfür nicht erforderlich. Ebenfalls können die erfindungsgemäßen Zubereitungen lösungsmittelarm (Lösungsmittelgehalt < 5 Gew.-%) oder lösungsmittelfrei (Lösungsmittelgehalt < 1 Gew.-%, insbesondere < 0, 5 Gew.-%) formuliert werden. Die Zubereitungen können ohne Entmischung über einen längeren Zeitraum von mehren Monaten auch bei erhöhter Temperatur und/oder bei stark wechselnden Temperaturen gelagert werden. Auch treten Kristallisationsphänomene, wie sie teilweise bei Formulierungen einiger Conazolfungizide und insbesondere bei Formulierungen des Epoxiconazols auftreten können, nicht auf.

Die erfindungsgemäßen Zubereitungen eignen sich in besonderer Weise zur Bekämpfung pflanzenpathogener Pilze und sind dabei üblichen Formulierungen von Wirkstoff 1 und 2 zumindest ebenbürtig und häufig überlegen. Die erfindungsgemäßen Zubereitungen zeichnen sich durch eine hervorragende Wirksamkeit gegen ein breites Spektrum von pflanzenpathogenen Pilzen, insbesondere aus der Klasse der *Ascomyceten, Deuteromyceten* und *Basidiomyceten* aus.

Besondere Bedeutung haben sie für die Bekämpfung einer Vielzahl von Pilzen an verschiedenen Kulturpflanzen wie Weizen, Roggen, Gerste, Hafer, Reis, Mais, Gras, Bananen, Baumwolle, Soja, Kaffee, Zuckerrohr, Wein, Obst- und Zierpflanzen und Gemüsepflanzen wie Gurken, Bohnen, Tomaten, Kartoffeln und Kürbisgewächsen, sowie an den Samen dieser Pflanzen.

Speziell eignen sie sich zur Bekämpfung folgender Pflanzenkrankheiten:
- *Alternaria*-Arten an Gemüse und Obst,
- *Bipolaris-* und *Drechstera*-Arten an Getreide, Reis und Rasen,
- *Blumeria graminis* (echter Mehltau) an Getreide,
- *Botrytis cinerea* (Grauschimmel) an Erdbeeren, Gemüse, Zierpflanzen und Reben,
- *Erysiphe cichoracearum* und *Sphaerotheca fuliginea* an Kürbisgewächsen,
- *Fusarium-* und *Verticillium*-Arten an verschiedenen Pflanzen,
- *Mycosphaerella*-Arten an Getreide, Bananen und Erdnüssen,
- *Phytophthora infestans* an Kartoffeln und Tomaten,
- *Plasmopara viticola* an Reben,
- *Podosphaera leucotricha* an Äpfeln,
- *Pseudocercosporella herpotrichoides* an Weizen und Gerste,
- *Pseudoperonospora-*Arten an Hopfen und Gurken,
- *Puccinia*-Arten an Getreide,
- *Pyricularia oryzae* an Reis,
- *Rhizoctonia*-Arten an Baumwolle, Reis und Rasen,
- *Septoria tritici* und *Stagonospora nodorum* an Weizen,
- *Uncinula necator* an Reben,
- Ustilago-Arten an Getreide und Zuckerrohr, sowie
- *Venturia-*Arten (Schorf) an Äpfeln und Birnen.

Die erfindungsgemäßen Zubereitungen eignen sich außerdem zur Bekämpfung von Schadpilzen wie *Paecilomyces variotii* im Materialschutz (z.B. Holz, Papier, Dispersionen für den Anstrich, Fasern bzw. Gewebe) und im Vorratsschutz.

Die Zubereitungen werden typischerweise angewendet, indem man die Pilze oder die vor Pilzbefall zu schützenden Pflanzen, Saatgüter, Materialien oder den Erdboden mit einer verdünnten wässrigen Aufbereitung der erfindungsgemäßen Zubereitungen behandelt, welche eine fungizid wirksamen Menge der Wirkstoffe 1 und 2 enthalten. Die Anwendung kann sowohl vor als auch nach der Infektion der Materialien, Pflanzen oder Samen durch die Pilze erfolgen.

Die Wirkstoffkonzentrationen in den wässrigen Aufbereitungen können in größeren Bereichen variiert werden. Im Allgemeinen liegen sie zwischen 0,0001 und 1%, vorzugsweise zwischen 0,0005 und 0,1%.

Die Aufwandmengen liegen bei der Anwendung im Pflanzenschutz je nach Art des gewünschten Effektes zwischen 0,01 und 2,0 kg Wirkstoff pro ha.

Bei der Saatgutbehandlung werden im allgemeinen Wirkstoffmengen von 1 bis 1000 g/100 kg Saatgut, vorzugsweise 1 bis 200 g/100 kg, insbesondere 5 bis 100 g/100 kg verwendet.

Bei der Anwendung im Material- bzw. Vorratsschutz richtet sich die Aufwandmenge an Wirkstoff nach der Art des Einsatzgebietes und des gewünschten Effekts. Übliche Aufwandmengen sind im Materialschutz beispielsweise 0,001 g bis 2 kg, vorzugsweise 0,005 g bis 1 kg Wirkstoff pro Kubikmeter behandelten Materials.

Die folgenden Beispiele dienen der Erläuterung der Erfindung und sind nicht einschränkend zu verstehen.

### Analytik:

Die Bestimmung der Glasübergangstemperatur erfolgte mittels eines DSC-Gerätes DSC30 der Fa. Mettler bei einer Aufheizrate von 10 K/min.

Die Bestimmung der Molekulargewichte erfolgte mittels Gelpermeationschromatographie (Gerät "Series 1100" der Fa. Agilent) unter Verwendung eines RI-Detektors und einer 5µ Mixed-D-Säule der Fa. PL bei 30°C (Säulentemperatur). Als Eluent diente unter Verwendung von Dimethylformamid, das 0,5 % Lithiumbromid enthielt. Die Flußrate betrug 1 ml/min. Die Eichung erfolgte mittels Polymethylmethacrylat-Eichsätzen.

### Herstellung der Copolymere CP

### Herstellungsbeispiel 1: Copolymer CP1

In einem Reaktionsgefäß legte man 250 g DMF vor und erwärmte auf 90°C. Hierzu gab man unter Beibehaltung der Temperatur innerhalb von 3 h parallel Zulauf 1, bestehend aus 49,5 g 2-Acrylamido-2-methylpropansulfonsäure, 96,1 g 2-Hydroxyethylacrylat, 145,6 g n-Butylacrylat und 148,5 g DMF, sowie Zulauf 2, bestehend aus 8,74 g AIBN und 301,5 g DMF, zu. Nach Beendigung der Zuläufe polymerisierte man weitere 2 h bei 95°C.

### Herstellungsbeispiel 2: Copolymer CP2

In einem Reaktionsgefäß legte man 300 g DMF vor und erwärmte auf 90°C. Hierzu gab man unter Beibehaltung der Temperatur innerhalb von 3 h parallel Zulauf 1, bestehend aus 36,0 g 2-Acrylamido-2-methylpropansulfonsäure, 184,0 g 2-Hydroxyethylacrylat, 180,0 g n-Butylacrylat und 148,5 g DMF, sowie Zulauf 2, bestehend aus 12,0 g AIBN und 120 g DMF, zu. Nach Beendigung der Zuläufe polymerisierte man weitere 2 h bei 95°C.

### Herstellungsbeispiel 3: Copolymer CP3

In einem Reaktionsgefäß legte man unter Inertgas 300 g DMF vor und erwärmte auf 90°C. Hierzu gab man unter Beibehaltung der Temperatur innerhalb von 3 h parallel Zulauf 1, bestehend aus 36,0 g 2-Acrylamido-2-methylpropansulfonsäure, 192,0 g 2-Hydroxyethylacrylat, 172,0 g n-Butylacrylat und 148,5 g DMF, sowie Zulauf 2, bestehend aus 12,0 g AIBN und 120 g DMF, zu. Nach Beendigung der Zuläufe polymerisierte man weitere 2 h bei 95°C.

### Herstellungsbeispiele 4 bis 6

### Allgemeine Herstellungsvorschrift

In einem Synthesereaktor AutoPlant A100 der Fa. Chemspeed^{®} wurden je Reaktionsgefäß 15 ml DMF vorgelegt und auf 95 °C erwärmt. Hierzu wurden unter Rühren und Beibehaltung der Temperatur parallel innerhalb von 180 min Zulauf 1, sowie - zeitgleich mit Zulauf 1 startend - innerhalb von 195 min Zulauf 2 zudosiert. Nach Beendigung der Zuläufe wurde weitere 60 min bei 95 °C nachpolymerisiert.

### Herstellungsbeispiel 4: Copolymer CP4

| | |
|---|---|
| Zulauf 1: | Mischung bestehend aus 10,5 g Methylmethacrylat, 3,5 g Laurylacrylat und 7,0 g 2-Acrylamido-2-methylpropansulfonsäure, gelöst in DMF auf 49 ml. |
| Zulauf 2: | 0,63 g 2,2'-Azobis(2-methylpropionitril) gelöst in DMF auf 6 ml. |

### Herstellungsbeispiel 5: Copolymer CP5

| | |
|---|---|
| Zulauf 1: | Mischung bestehend aus 10,5 g n-Butylacrylat, 7,0 g 2-Hydroxyethylacrylat und 3,5 g 2-Acrylamido-2-methylpropansulfonsäure, gelöst in DMF auf 49 ml. |
| Zulauf 2: | 0,63 g 2,2'-Azobis(2-methylpropionitril) gelöst in DMF auf 6 ml. |

### Herstellungsbeispiel 6: Copolymer CP6

| | |
|---|---|
| Zulauf 1: | Mischung bestehend aus 17,5 g Methylacrylat und 3,5 g 2-Acrylamido-2-methylpropansulfonsäure, gelöst in DMF auf 49 ml. |
| Zulauf 2: | 0, 63 g 2,2'-Azobis(2-methylpropionitril) gelöst in DMF auf 6 ml. |

### Herstellungsbeispiele 7 bis 9

### Allgemeine Herstellungsvorschrift :

In einem Synthesereaktor Accelerator™ SLT100 der Fa. Chemspeed^{®} wurde je Reaktionsgefäß 6,72 ml von Monomerlösung 1 mit 0,21 ml von Initiatorlösung 2 versetzt. Anschließend wurde der Ansatz unter Schütteln 4 h auf 95 °C erhitzt, bevor weitere 0,07 ml von Initiatorlösung 2 zugegeben und die Polymerisation innerhalb von 2 h bei 95 °C abgeschlossen wurde.

### Herstellungsbeispiel 7: CP7

| | |
|---|---|
| Monomerlösung 1: | Mischung bestehend aus 150 mg Methylmethacrylat, 450 mg 2-Phenoxyethylacrylat und 300 mg 2-Acrylamido-2-methylpropansulfonsäure gelöst in DMF auf 8,64 ml. |
| Initiatorlösung 2: | 100 mg 2,2'-Azobis(2-methylpropionitril) gelöst in DMF auf 1,00 ml. |

### Herstellungsbeispiel 8: CP8

| | |
|---|---|
| Monomerlösung 1: | Mischung bestehend aus 300 mg Hydroxypropyl-methacrylat, 300 mg Styrol und 300 mg 2-Acrylamido-2-methylpropansulfonsäure gelöst in DMF auf 8,64 ml. |
| Initiatorlösung 2: | 100 mg 2,2'-Azobis(2-methylpropionitril) gelöst in DMF auf 1,00 ml. |

### Herstellungsbeispiel 9: CP9

| | |
|---|---|
| Monomerlösung 1: | Mischung bestehend aus 450 mg Methylacrylat, 300 mg 1-Vinyl-2-pyrrolidon und 150 mg 2-Acrylamido-2-methylpropansulfonsäure gelöst in DMF auf 8,64 ml. |
| Initiatorlösung 2: | 100 mg 2,2'-Azobis(2-methylpropionitril) gelöst in DMF auf 1,00 ml. |

Die Molekulargewichte und Glastemperaturen der Copolymere CP1 bis CP4 sind in Tabelle 1 angegeben:

**Tabelle 1:**

| Copolymer | Mₙ | M_{w} | T_{g} [°C] |
|---|---|---|---|
| CP1 | 5700 | 11000 | 16 |
| CP2 | 7600 | 15900 | -6 |
| CP3 | 7800 | 16800 | -4 |
| CP4 | 12437 | 21853 | n.b. |

| | | | |
|---|---|---|---|
| n.b. nicht bestimmt | | | |

### Herstellung der erfindungsgemäßen Zubereitungen Z1, Z2, Z3, Z4 und Z5:

### Allgemeine Herstellungsvorschrift für feste Formulierungen

In einer Lösung von 30 g Copolymer CP in 70 g DMF löste man 10 g eines Wirkstoffgemisches von Epoxiconazol und Pyraclostrobin (Gewichtsverhältnis 5:7 im Fall von Z1, Z2 und Z3; Gewichtsverhältnis 1:1 im Fall von Z5) beziehungsweise von Epoxiconazol und Metconazol (Gewichtsverhältnis 1:1 im Fall von Z4). Man entfernte das Lösungsmittel im Vakuum bei einer Temperatur von 80°C, wobei man eine feste homogene Masse erhielt, die keine kristallinen Bestandteile aufwies.

In Vergleichsversuchen VZ1, VZ2, VZ3 und VZ4 wurde anstelle des Wirkstoffgemischs 10 g reines Epoxiconazol unter den oben angegebenen Bedingungen formuliert. Hierbei erhielt man feste Massen, die jeweils kristalline Bestandteile aufwies.

**Tabelle 2: Zubereitungen der festen Wirkstoffformulierungen**

| Zubereitung | Copolymer | Wirkstoff-Typ | Wirkstoff/Copolymer [g/g]¹⁾ |
|---|---|---|---|
| Z1 | CP1 | Epoxiconazol/Pyraclostrobin 5:7¹⁾ | 1:3 |
| Z2 | CP2 | Epoxiconazol/Pyraclostrobin 5:7¹⁾ | 1:3 |
| Z3 | CP3 | Epoxiconazol/Pyraclostrobin 5:7¹⁾ | 1:3 |
| Z4 | CP4 | Epoxiconazol/Metconazol 1:1¹⁾ | 1:3 |
| Z5 | CP4 | Metconazol/Pyraclostrobin 1:1¹⁾ | 1:3 |
| VZ1* | CP1 | Epoxiconazol | 1:3 |
| VZ2* | CP2 | Epoxiconazol | 1:3 |
| VZ3* | CP3 | Epoxiconazol | 1:3 |
| VZ4* | CP4 | Epoxiconazol | 1:3 |

| | | | |
|---|---|---|---|
| *Vergleichsformulierung 1) Gewichtsverhältnis | | | |

Beim Verdünnen der Zubereitungen Z1, Z2, Z3, Z4 und Z5 mit Wasser auf eine Wirkstoffkonzentration von 64 ppm erhielt man optisch wasserklare Lösungen. Die mittlere Teilchengröße aller Proben lag daher unterhalb 100 nm. Im Unterschied hierzu wurde beim Verdünnen der Proben VZ1 bis VZ4 die Abscheidung von Feststoff beobachtet.

Zur Bestimmung der Lagerstabilität wurden Proben der Zubereitungen Z1, Z2, Z3, Z4 und Z5 5 Monate bei -10°C, Raumtemperatur bzw. 55°C gelagert. Bei keiner der Proben trat die Bildung von kristallinem Material auf. Alle Proben ließen sich nach dieser Zeit mit Wasser zu optisch wasserklaren Lösungen verdünnen.

### Anwendungstechnische Prüfung

### Untersuchung der fungiziden Wirkung

Die jeweilige Wirkstoffzubereitung wurde als Stammlösung mit einer Konzentration von 64 ppm Wirkstoff aufbereitet und anschließend mit Wasser zu der unten angegeben Wirkstoffkonzentration verdünnt (Tabelle 3).

Blätter von in Töpfen gewachsenen Weizensämlingen der Sorte "Kanzler" wurden mit einer Sporensuspension des Braunrostes (*Puccinia recondita*) inokuliert. Danach wurden die Töpfe für 24 Stunden in eine Kammer mit hoher Luftfeuchtigkeit (90 bis 95 %) und 20 bis 22° C gestellt. Während dieser Zeit keimten die Sporen aus und die Keimschläuche drangen in das Blattgewebe ein. Die infizierten Pflanzen wurden am nächsten Tag mit einer wässrigen Suspension in der unten angegebenen Wirkstoffkonzentration bis zur Tropfnässe besprüht. Die Suspension wurde wie oben beschrieben hergestellt. Nach dem Antrocknen des Spritzbelages wurden die Versuchspflanzen im Gewächshaus bei Temperaturen zwischen 20 und 22° C und 65 bis 70 % relativer Luftfeuchte für 7 Tage kultiviert. Dann wurde das Ausmaß der Rostpilzentwicklung auf den Blättern ermittelt.

Die Ergebnisse der biologischen Prüfung sind in Tabelle 3 zusammengefasst. Die Ergebnisse zeigen, dass die mit den Copolymeren stabilisierte Wirkstoffmischung bei geringen Aufwandmengen eine bessere fungizide Aktivität als kommerzielle Produkte aufweist.

**Tabelle 3:**

| | Befall [%] | Befall [%] | Befall [%] | Befall [%] |
|---|---|---|---|---|
| Zubereitung: Aufwandmenge [ppm] | Z1 | Z2 | Z3 | konventionelle Suspoemulsion¹⁾ |
| 32 | 2 | 4 | 0 | 6 |
| 16 | 15 | 18 | 6 | 16 |
| 8 | 43 | 40 | 43 | 60 |

| | | | | |
|---|---|---|---|---|
| 1) Zubereitung der konventionellen Suspoemulsion: 4,7 Gew.-% Epoxiconazol 12,5 Gew.-% Pyraclostrobin 29,2 Gew.-% aromatische Lösungsmittel ca. 12 Gew.-% Fettalkoholethoxilat ca. 4 Gew.-% Phenolsulfonsäure-Formaldehyd-Kondensat-Natriumsalz Verdicker Biozid in 1 l wässriger Formulierung | | | | |

## Patentansprüche

1. Zubereitung, enthaltend eine Mischung wenigstens zweier voneinander verschiedener Pflanzenschutzwirkstoffe, wobei
a) wenigstens ein fungizider Wirkstoff aus der Gruppe Epoxiconazol und Metconazol (Wirkstoff 1) ausgewählt ist und
b) der wenigstens eine weitere Pflanzenschutzwirkstoff (Wirkstoff 2) in Wasser bei 20°C eine Löslichkeit unterhalb 20 g/l aufweist, wobei der Wirkstoff 2 ausgewählt ist unter von Wirkstoff 1 verschiedenen Conazolfungiziden, Strobilurinen, Morpholin-Fungiziden, Spiroxamin, Chlorothalonil, Metrafenone und Boscalid,
enthaltend weiterhin
c) wenigstens ein aus ethylenisch ungesättigten Monomeren M aufgebautes Copolymer CP, wobei die Monomere M
α) wenigstens ein monoethylenisch ungesättigtes Monomer M1, das wenigstens eine Sulfonsäuregruppe aufweist, und
β) wenigstens ein neutrales, monoethylenisch ungesättigtes Monomer M2 umfassen,
worin das Mengenverhältnis von Wirkstoff 1 zu dem wenigstens einen weiteren Pflanzenschutzwirkstoff 2 im Bereich von 1:10 bis 10:1 liegt,
wobei die Zubereitung das Copolymer CP in einer Menge von 10 bis 1000 Gew.-%, bezogen auf die Gesamtmenge an Wirkstoff 1 und Wirkstoff 2 enthält.

2. Zubereitung nach Anspruch 1, worin der Wirkstoff 1 Epoxiconazol ist.

3. Zubereitung nach Anspruch 2, wobei der Wirkstoff 1 Epoxiconazol und der Wirkstoff 2 Pyraclostrobin ist.

4. Zubereitung nach Anspruch 2, wobei der Wirkstoff 1 Epoxiconazol und der Wirkstoff 2 ausgewählt ist unter Prochloraz, Cyproconazol, Fluquinconazol, Hexaconazol, Metconazol, Penconazol, Propiconazol, Prothioconazol, Tebuconazol und Triticonazol.

5. Zubereitung nach einem der vorhergehenden Ansprüche, worin im Copolymer CP die Monomere M1 1 bis 90 Gew.-% der Gesamtmenge der das Copolymer CP konstituierenden Monomere M ausmachen.

6. Zubereitung nach einem der vorhergehenden Ansprüche, worin die Monomere M1 ausgewählt sind unter Monomeren der allgemeinen Formel I 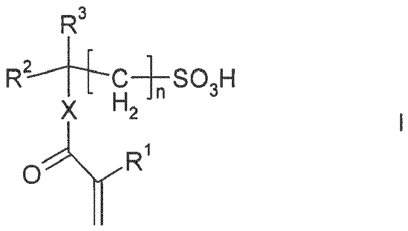 worin
n für 0, 1, 2 oder 3 steht;
X O oder NR⁵ bedeutet;
R¹ für Wasserstoff oder Methyl steht;
R², R³ unabhängig voneinander Wasserstoff oder C₁-C₄-Alkyl bedeuten und
R⁵ Wasserstoff oder C₁-C₄-Alkyl bedeutet.

7. Zubereitung nach einem der vorhergehenden Ansprüche, worin im Copolymer CP die Monomere M2 wenigstens ein Monomer M2a, das bei 20°C in Wasser eine Löslichkeit unterhalb 50 g/l aufweist, umfassen.

8. Zubereitung nach Anspruch 7, worin die Monomere M2a 10 bis 99 Gew.-% der Gesamtmenge der das Copolymer CP konstituierenden Monomere M ausmachen.

9. Zubereitung nach Anspruch 7 oder 8, worin die Monomere M2a ausgewählt sind unter vinylaromatischen Monomeren, Estern der Acrylsäure mit C₂-C₂₀-Alkanolen, C₄-C₁₀-Cycloalkanolen, Phenyl-C₁-C₄-alkanolen und Phenoxy-C₁-C₄-alkanolen und den Estern der Methacrylsäure mit C₁-C₂₀-Alkanolen, C₄-C₁₀-Cycloalkanolen, Phenyl-C₁-C₄-alkanolen und Phenoxy-C₁-C₄-alkanolen.

10. Zubereitung nach einem der Ansprüche 7 bis 9, worin im Copolymer CP die Monomere M2 zusätzlich wenigstens ein Monomer M2b umfassen, das bei 20°C in Wasser eine Löslichkeit oberhalb 50 g/l aufweist.

11. Zubereitung nach Anspruch 10, worin die Gesamtmenge der Monomere M1 + M2b 10 bis 90 Gew.-% der Gesamtmenge der das Copolymer CP konstituierenden Monomere M ausmachen.

12. Zubereitung nach Anspruch 10 oder 11, worin die Monomere M2b ausgewählt sind unter Hydroxy-C₂-C₄-alkylestern der Acrylsäure und der Methacrylsäure, Acrylamid, Methacrylamid, Acrylnitril, N-Vinyllactamen und Methylacrylat.

13. Zubereitung nach einem der Ansprüche 7 bis 12, wobei die Monomere M2a wenigstens ein erstes Monomer M2a(1) mit einer Wasserlöslichkeit von 1 bis < 50 g/l bei 20 °C und wenigstens ein zweites Monomer M2a(2) mit einer Wasserlöslichkeit < 1 g/l bei 20 °C umfassen.

14. Zubereitung nach Anspruch 13, wobei die Monomere M2a(1) ausgewählt sind unter den Estern der Acrylsäure mit C₂-C₄-Alkanolen und den Estern der Methacrylsäure mit C₁-C₄-Alkanolen.

15. Zubereitung nach Anspruch 13 oder 14, wobei die Monomere M2a(2) ausgewählt sind unter C₆-C₂₀-Alkylacrylaten und C₆-C₂₀-Alkylmethacrylaten.

16. Zubereitung nach einem der Ansprüche 13 bis 15, enthaltend:
1 bis 89 Gew.-% Monomere M1,
10 bis 98 Gew.-% Monomere M2a(1) und
1 bis 89 Gew.-% Monomere M2a(2),
wobei alle Angaben in Gew.-% auf die Gesamtmenge der das Copolymer CP konstituierenden Monomere M bezogen ist.

17. Zubereitung nach einem der vorhergehenden Ansprüche, worin das Copolymer CP ein zahlenmittleres Molekulargewicht im Bereich von 1000 bis 100000 Dalton aufweist.

18. Zubereitung nach einem der vorhergehenden Ansprüche in fester Form.

19. Zubereitung nach Anspruch 18 in Form eines in Wasser dispergierbaren Pulvers oder Granulats.

20. Zubereitung nach Anspruch 18, enthaltend zusätzlich einen inerten, feinteiligen anorganischen Träger.

21. Verfahren zur Herstellung einer Zubereitung nach einem der vorhergehenden Ansprüche, umfassend das innige Vermischen von Wirkstoff 1, dem Copolymeren CP und Wirkstoff 2 und gegebenenfalls weiterer Bestandteile.

22. Verfahren nach Anspruch 21, wobei das Vermischen die folgenden Schritte umfasst:
i) Bereitstellen einer Lösung von Wirkstoff 1, dem Copolymeren CP und dem Wirkstoff 2 in einem organischen Lösungsmittel und
ii) Entfernen des organischen Lösungsmittels.

23. Verfahren nach Anspruch 22, umfassend zusätzlich das Dispergieren des in Schritt ii) erhaltenen Materials oder der in Schritt i) erhaltenen Lösung in Wasser.

24. Verwendung von Zubereitungen nach einem der Ansprüche 1 bis 20 zur Bekämpfung pflanzenpathogener Pilze.

25. Verwendung von Copolymeren CP, wie in Anspruch 1 definiert, zur Herstellung von Wirkstoffzubereitungen, enthaltend
a) wenigstens einen fungiziden Wirkstoff aus der Gruppe Epoxiconazol und Metconazol (Wirkstoff 1),
b) wenigstens einen weiteren Pflanzenschutzwirkstoff (Wirkstoff 2), der bei 20°C in Wasser eine Löslichkeit unterhalb 20 g/l aufweist, wobei der Wirkstoff 2 ausgewählt ist unter von Wirkstoff 1 verschiedenen Conazolfungiziden, Strobilurinen, Morpholin-Fungiziden, Spiroxamin, Chlorothalonil, Metrafenone und Boscalid.
in einem Mengenverhältnis von Wirkstoff 1 zu Wirkstoff 2 im Bereich von 10:1 bis 1:10,
wobei man das Copolymer CP in einer Menge von 10 bis 1000 Gew.-%, bezogen auf die Gesamtmenge an Wirkstoff 1 und Wirkstoff 2, verwendet.

26. Verwendung von Copolymeren CP, wie in Anspruch 1 definiert, zur Stabilisierung wässriger Dispersionen von Wirkstoffgemischen, umfassend
a) wenigstens einen fungiziden Wirkstoff aus der Gruppe Epoxiconazol und Metconazol (Wirkstoff 1),
b) wenigstens einen weiteren Pflanzenschutzwirkstoff (Wirkstoff 2), der bei 20 °C in Wasser eine Löslichkeit unterhalb 20 g/l aufweist, wobei der Wirkstoff 2 ausgewählt ist unter von Wirkstoff 1 verschiedenen Conazolfungiziden, Strobilurinen, Morpholin-Fungiziden, Spiroxamin, Chlorothalonil, Metrafenone und Boscalid.
in einem Mengenverhältnis von Wirkstoff 1 zu Wirkstoff 2 im Bereich von 10:1 bis 1:10,
wobei man das Copolymer CP in einer Menge von 10 bis 1000 Gew.-%, bezogen auf die Gesamtmenge an Wirkstoff 1 und Wirkstoff 2, verwendet.

## Claims

1. A preparation, comprising a mixture of at least two different crop protection agents, where
a) at least one fungicidally active compound is selected from the group consisting of epoxiconazole and metconazole (active compound 1) and
b) the at least one further crop protection agent (active compound 2) has a solubility in water at 20°C of less than 20 g/l, where the active compound 2 is selected from the group consisting of conazole fungicides different from active compound 1, strobilurins, morpholine fungicides, spiroxamine, chlorothalonil, metrafenone and boscalid,
furthermore comprising
c) at least one copolymer CP constructed of ethylenically unsaturated monomers M, where the monomers M comprise
α) at least one monoethylenically unsaturated monomer M1 which has at least one sulfonic acid group, and
β) at least one neutral monoethylenically unsaturated monomer M2,
where the ratio of active compound 1 to the at least one further crop protection agent 2 is in the range from 1:10 to 10:1,
where the preparation comprises the copolymer CP in an amount of from 10 to 1000% by weight, based on the total amount of active compound 1 and active compound 2.

2. The preparation according to claim 1, in which the active compound 1 is epoxiconazole.

3. The preparation according to claim 2, where the active compound 1 is epoxiconazole and the active compound 2 is pyraclostrobin.

4. The preparation according to claim 2, where the active compound 1 is epoxiconazole and the active compound 2 is selected from the group consisting of prochloraz, cyproconazole, fluquinconazole, hexaconazole, metconazole, penconazole, propiconazole, prothioconazole, tebuconazole and triticonazole.

5. The preparation according to any of the preceding claims where in copolymer CP the monomers M1 make up 1 to 90% by weight of the total amount of the monomers M which constitute the copolymer CP.

6. The preparation according to any of the preceding claims in which the monomers M1 are selected from monomers of the formula I 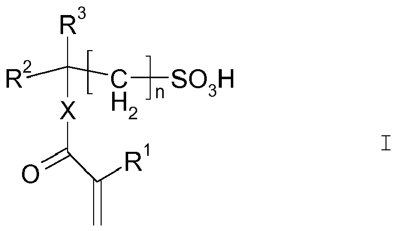 in which
n is 0, 1, 2 or 3;
X is O or NR⁵;
R¹ is hydrogen or methyl;
R², R³ independently of one another are hydrogen or C₁-C₄-alkyl and
R⁵ is hydrogen or C₁-C₄-alkyl.

7. The preparation according to any of the preceding claims in which in copolymer CP the monomers M2 comprise at least one monomer M2a which has a solubility in water at 20°C of less than 50 g/l.

8. The preparation according to claim 7 in which the monomers M2a make up 10 to 99% by weight of the total amount of the monomers M which constitute the copolymer CP.

9. The preparation according to claim 7 or 8 where the monomers M2a are selected from the group consisting of vinylaromatic monomers, esters of acrylic acid with C₂-C₁₀-alkanols, C₄-C₁ₒ-cycloalkanols, phenyl-C₁-C₄-alkanols and phenoxy-C₁-C₄-alkanols and the esters of methacrylic acid with C₁-C₁₀-alkanols, C₄-C₁₀-cycloalkanols, phenyl-C₁-C₄-alkanols and phenoxy-C₁-C₄-alkanols.

10. The preparation according to any of claims 7 to 9 where in copolymer CP the monomers M2 additionally comprise at least one monomer M2b which has a solubility in water at 20°C of more than 50 g/l.

11. The preparation according to claim 10 where the total amount of the monomers M1 + M2b makes up 10 to 90% by weight of the total amount of the monomers M which constitute the copolymer CP.

12. The preparation according to claim 10 or 11 where the monomers M2b are selected from the group consisting of hydroxy-C₂-C₄-alkyl esters of acrylic acid and of methacrylic acid, acrylamide, methacrylamide, acrylonitrile, N-vinyllactams and methyl acrylate.

13. The preparation according to any of claims 7 to 12 where the monomers M2a comprise at least one first monomer M2a(1) having a solubility in water at 20°C of from 1 to < 50 g/l and at least one second monomer M2a(2) having a solubility in water at 20°C of < 1 g/l.

14. The preparation according to claim 13 where the monomers M2a(1) are selected from the group consisting of esters of acrylic acid with C₂-C₄-alkanols and esters of methacrylic acid with C₁-C₄-alkanols.

15. The preparation according to claim 13 or 14 where the monomers M2a(2) are selected from the group consisting of C₆-C₂₀-alkyl acrylates and C₆-C₂₀-alkyl methacrylates.

16. The preparation according to any of claims 13 to 15, comprising:
from 1 to 89% by weight of monomers M1,
from 10 to 98% by weight of monomers M2a(1) and
from 1 to 89% by weight of monomers M2a(2),
all statements in % by weight being based on the total amount of monomers M constituting the copolymer CP.

17. The preparation according to any of the preceding claims in which the copolymer CP has a number-average molecular weight in the range from 1000 to 100 000 Dalton.

18. The preparation according to any of the preceding claims in solid form.

19. The preparation according to claim 18 in the form of a water-dispersible powder or in the form of water-dispersible granules.

20. The preparation according to claim 18, additionally comprising an inert finely divided inorganic carrier.

21. A process for producing a preparation according to any of the preceding claims, which comprises intimately mixing active compound 1, copolymer CP and active compound 2 and optionally further components.

22. The process according to claim 21 where the mixing comprises the following steps:
i) providing a solution of active compound 1, copolymer CP and active compound 2 in an organic solvent and
ii) removing the organic solvent.

23. The process according to claim 22, additionally comprising the dispersion of the material obtained in step ii) or solution obtained in step i) in water.

24. The use of preparations according to any of claims 1 to 20 for controlling phytopathogenic fungi.

25. The use of copolymers CP, as defined in claim 1, for producing active compound preparations comprising
a) at least one fungicidally active compound from the group consisting of epoxiconazole and metconazole (active compound 1),
b) at least one further crop protection agent (active compound 2) which has a solubility in water at 20°C of less than 20 g/l, where the active compound 2 is selected from the group consisting of conazole fungicides different from active compound 1, strobilurins, morpholine fungicides, spiroxamine, chlorothalonil, metrafenone and boscalid,
in a ratio of active compound 1 to active compound 2 in the range from 10:1 to 1:10,
where the copolymer CP is used in an amount of from 10 to 1000% by weight, based on the total amount of active compound 1 and active compound 2.

26. The use of copolymers CP, as defined in claim 1, for stabilizing aqueous dispersions of active compound mixtures comprising
a) at least one fungicidally active compound from the group consisting of epoxiconazole and metconazole (active compound 1),
b) at least one further crop protection agent (active compound 2) which has a solubility in water at 20°C of less than 20 g/l, where the active compound 2 is selected from the group consisting of conazole fungicides different from active compound 1, strobilurins, morpholine fungicides, spiroxamine, chlorothalonil, metrafenone and boscalid,
in a ratio of active compound 1 to active compound 2 in the range from 10:1 to 1:10,
where the copolymer CP is used in an amount of from 10 to 1000% by weight, based on the total amount of active compound 1 and active compound 2.

## Revendications

1. Préparation, contenant un mélange d'au moins deux substances actives phytosanitaires différentes l'une de l'autre, dans laquelle
a) au moins une substance active fongicide est choisie dans le groupe constitué par l'époxiconazole et le metconazole (substance active 1) et
b) ladite au moins une autre substance active phytosanitaire (substance active 2) présente dans l'eau à 20 °C une solubilité inférieure à 20 g/l, la substance active 2 étant choisie parmi des fongicides conazole différents de la substance active 1, les strobilurines, les fongicides de type morpholine, la spiroxamine, le chlorothalonil, la métrafénone et le boscalide,
contenant en outre
c) au moins un copolymère CP constitué de monomères M à insaturation éthylénique, les monomères M comprenant
α) au moins un monomère M1 à insaturation monoéthylénique, qui comporte au moins un groupe sulfo, et
β) au moins un monomère M2 neutre, à insaturation monoéthylénique,
le rapport de quantités de la substance active 1 à ladite au moins une autre substance active phytosanitaire 2 se situant dans la plage de 1:10 à 10:1,
la préparation contenant le copolymère CP en une quantité de 10 à 1 000 % en poids, par rapport à la quantité totale de substance active 1 et substance active 2.

2. Préparation selon la revendication 1, dans laquelle la substance active 1 est l'époxiconazole.

3. Préparation selon la revendication 2, dans laquelle la substance active 1 est l'époxiconazole et la substance active 2 est la pyraclostrobine.

4. Préparation selon la revendication 2, dans laquelle la substance active 1 est l'époxiconazole et la substance active 2 est choisie parmi le prochloraz, le cyproconazole, le fluquinconazole, l'hexaconazole, le metconazole, le penconazole, le propiconazole, le prothioconazole, le tébuconazole et le triticonazole.

5. Préparation selon l'une quelconque des revendications précédentes, dans laquelle dans le copolymère CP les monomères M1 représentent 1 à 90 % en poids de la quantité totale des monomères M constituant le copolymère CP.

6. Préparation selon l'une quelconque des revendications précédentes, dans laquelle les monomères M1 sont choisis parmi des monomères de formule générale I 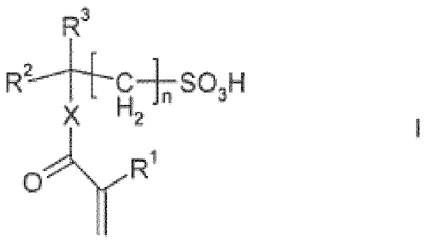 dans laquelle
n représente 0, 1, 2 ou 3 ;
X représente O ou NR⁵ ;
R¹ représente un atome d'hydrogène ou le groupe méthyle ;
R², R³ représentent indépendamment l'un de l'autre un atome d'hydrogène ou un groupe alkyle en C₁-C₄ et
R⁵ représente un atome d'hydrogène ou un groupe alkyle en C₁-C₄.

7. Préparation selon l'une quelconque des revendications précédentes, dans laquelle dans le copolymère CP les monomères M2 comprennent au moins un monomère M2a qui à 20 °C dans l'eau présente une solubilité inférieure à 50 g/l.

8. Préparation selon la revendication 7, dans laquelle les monomères M2a représentent 10 à 99 % en poids de la quantité totale des monomères M constituant le copolymère CP.

9. Préparation selon la revendication 7 ou 8, dans laquelle les monomères M2a sont choisis parmi des monomères vinylaromatiques, des esters de l'acide acrylique avec des alcanols en C₂-C₂₀, cycloalcanols en C₄-C₁₀, phényl-alcanols(C₁-C₄) et phénoxy-alcanols(C₁-C₄) et les esters de l'acide méthacrylique avec des alcanols en C₁-C₂₀, cycloalcanols en C₄-C₁₀, phényl-alcanols(C₁-C₄) et phénoxy-alcanols(C₁-C₄).

10. Préparation selon l'une quelconque des revendications 7 à 9, dans laquelle dans le copolymère CP les monomères M2 en outre comprennent au moins un monomère M2b qui présente à 20 °C dans l'eau une solubilité supérieure à 50 g/l.

11. Préparation selon la revendication 10, dans laquelle la quantité totale des monomères M1 + M2b représente 10 à 90 % en poids de la quantité totale des monomères M constituant le copolymère CP.

12. Préparation selon la revendication 10 ou 11, dans laquelle les monomères M2b sont choisis parmi des esters d'hydroxyalkyle(C₂-C₄) de l'acide acrylique et de l'acide méthacrylique, l'acrylamide, le méthacrylamide, l'acrylonitrile, les N-vinyllactames et l'acrylate de méthyle.

13. Préparation selon l'une quelconque des revendications 7 à 12, dans laquelle les monomères M2a comprennent au moins un premier monomère M2a(1) ayant une solubilité dans l'eau de 1 à < 50 g/l à 20 °C et au moins un deuxième monomère M2a(2) ayant une solubilité dans l'eau < 1 g/l à 20 °C.

14. Préparation selon la revendication 13, dans laquelle les monomères M2a(1) sont choisis parmi les esters de l'acide acrylique avec des alcanols en C₂-C₄ et les esters de l'acide méthacrylique avec des alcanols en C₁-C₄.

15. Préparation selon la revendication 13 ou 14, dans laquelle les monomères M2a(2) sont choisis parmi des acrylates d'alkyle en C₆-C₂₀ et des méthacrylates d'alkyle en C₆-C₂₀.

16. Préparation selon l'une quelconque des revendications 13 à 15, contenant :
1 à 89 % en poids de monomères M1,
10 à 98 % en poids de monomères M2a(1) et
1 à 89 % en poids de monomères M2a(2),
toutes les données en % en poids se rapportant à la quantité totale des monomères M constituant le copolymère CP.

17. Préparation selon l'une quelconque des revendications précédentes, dans laquelle le copolymère CP présente une masse moléculaire moyenne en nombre dans la plage de 1 000 à 100 000 daltons.

18. Préparation selon l'une quelconque des revendications précédentes, sous forme solide.

19. Préparation selon la revendication 18, sous forme d'une poudre dispersable dans l'eau ou d'un granulé.

20. Préparation selon la revendication 18, contenant en outre une substance porteuse inorganique inerte, finement divisée.

21. Procédé pour la production d'une préparation selon l'une quelconque des revendications précédentes, comprenant le mélangeage intime de la substance active 1, du copolymère CP et de la substance active 2 et éventuellement d'autres composants.

22. Procédé selon la revendication 21, dans lequel le mélangeage comprend les étapes suivantes :
i) préparation d'une solution de substance active 1, du copolymère CP et de la substance active 2 dans un solvant organique et
ii) élimination du solvant organique.

23. Procédé selon la revendication 22, comprenant en outre la dispersion dans de l'eau de la matière obtenue dans l'étape ii) ou de la solution obtenue dans l'étape i).

24. Utilisation de préparations selon l'une quelconque des revendications 1 à 20 pour la lutte contre des champignons phytopathogènes.

25. Utilisation de copolymères CP, tels que définis dans la revendication 1, pour la production de préparations de substances actives, contenant
a) au moins une substance active fongicide choisie dans le groupe constitué par l'époxiconazole et le metconazole (substance active 1) et
b) au moins une autre substance active phytosanitaire (substance active 2) qui présente à 20 °C dans l'eau une solubilité inférieure à 20 g/l, la substance active 2 étant choisie parmi des fongicides conazole différents de la substance active 1, les strobilurines, les fongicides de type morpholine, la spiroxamine, le chlorothalonil, la métrafénone et le boscalide,
en un rapport de quantités de substance active 1 à substance active 2 dans la plage de 10:1 à 1:10,
en utilisant le copolymère CP en une quantité de 10 à 1 000 % en poids, par rapport à la quantité totale de substance active 1 et substance active 2.

26. Utilisation de copolymères CP, tels que définis dans la revendication 1, pour la stabilisation de dispersions aqueuses de mélanges de substances actives, comprenant
a) au moins une substance active fongicide choisie dans le groupe constitué par l'époxiconazole et le metconazole (substance active 1) et
b) au moins une autre substance active phytosanitaire (substance active 2) qui présente à 20 °C dans l'eau une solubilité inférieure à 20 g/l, la substance active 2 étant choisie parmi des fongicides conazole différents de la substance active 1, les strobilurines, les fongicides de type morpholine, la spiroxamine, le chlorothalonil, la métrafénone et le boscalide,
en un rapport de quantités de substance active 1 à substance active 2 dans la plage de à 10:1 à 1:10,
en utilisant le copolymère CP en une quantité de 10 à 1 000 % en poids, par rapport à la quantité totale de substance active 1 et substance active 2.
